(19) Europäisches Patentamt / European Patent Office / Office européen des brevets

(11) EP 4 750 203 A1

(12) **EUROPEAN PATENT APPLICATION**
published in accordance with Art. 153(4) EPC

(43) Date of publication:
**27.05.2026 Bulletin 2026/22**

(21) Application number: **24850609.9**

(22) Date of filing: **09.05.2024**

(51) International Patent Classification (IPC):
***H04W 72/25*** *(2023.01)* ***H04W 72/40*** *(2023.01)*
***H04W 72/0453*** *(2023.01)*

(52) Cooperative Patent Classification (CPC):
**H04W 72/0453; H04W 72/25; H04W 72/40**

(86) International application number:
**PCT/CN2024/092065**

(87) International publication number:
**WO 2025/030954 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311007742**

(71) Applicant: **HUAWEI TECHNOLOGIES CO., LTD.**
**Shenzhen 518129 (CN)**

(72) Inventors:
- **YI, Feng**
  **Shenzhen, Guangdong 518129 (CN)**
- **SU, Hongjia**
  **Shenzhen, Guangdong 518129 (CN)**

(74) Representative: **Roth, Sebastian**
**Mitscherlich PartmbB**
**Karlstraße 7**
**80333 München (DE)**

# (54) SIDELINK FEEDBACK INFORMATION TRANSMISSION METHOD, APPARATUS, CHIP SYSTEM AND STORAGE MEDIUM

(57) A sidelink feedback information transmission method, an apparatus, a chip system, and a storage medium relate to the field of communication technologies, and are provided to improve quality of sidelink feedback channel transmission. In this application, a first terminal apparatus determines a first frequency domain resource set based on first configuration information, where frequency domain resource units in the first frequency domain resource set belong to a plurality of interlaces; the first frequency domain resource set includes a plurality of resource subsets, and the resource subset includes at least one frequency domain resource unit; and the plurality of resource subsets include a first resource subset, and frequency domain resource units in the first resource subset belong to a same interlace. The first terminal apparatus sends first sidelink feedback information in the first resource subset. Because the first resource subset includes the plurality of frequency domain resource units, the first terminal apparatus may send the first sidelink feedback information on the plurality of frequency domain resource units in the first resource subset. In this way, a total transmit power of the first sidelink feedback information can be increased, to improve transmission quality of sidelink feedback information.

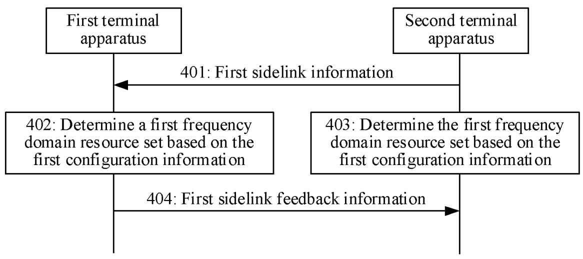


FIG. 4

EP 4 750 203 A1

## Description

### CROSS-REFERENCE TO RELATED APPLICATIONS

This application claims priority to Chinese Patent Application No. 202311007742.2, filed with the China National Intellectual Property Administration on August 10, 2023 and entitled "SIDELINK FEEDBACK INFORMATION TRANSMISSION METHOD, APPARATUS, CHIP SYSTEM, AND STORAGE MEDIUM", which is incorporated herein by reference in its entirety.

### TECHNICAL FIELD

This application relates to the field of communication technologies, and in particular, to a sidelink feedback information transmission method, an apparatus, a chip system, and a storage medium.

### BACKGROUND

A sidelink (sidelink, SL) communication technology is defined in the 3rd generation partnership project (3rd generation partnership project, 3GPP), and a typical application scenario includes vehicle-to-everything (vehicle-to-everything, V2X). An important evolution direction of SL communication is to use SL communication on an unlicensed (unlicensed) spectrum, and this part of technologies may be collectively referred to as SL-unlicensed (SL-unlicensed, SL-U) communication.

A time-frequency resource for SL communication is configured based on an SL communication resource pool, and the SL communication resource pool is a set of time resources and frequency domain resources used for SL communication. In SL communication, a terminal may transmit feedback information on a physical sidelink feedback channel (physical sidelink feedback channel, PSFCH). The feedback information may also be referred to as sidelink feedback information. The feedback information may include a conflict indication, and the feedback information may also include acknowledgment (acknowledgment, ACK)/negative acknowledgment (negative acknowledgment, NACK) information. For example, for one time of PSSCH transmission, if a transmit-end user includes physical layer hybrid automatic repeat request (hybrid automatic repeat request, HARQ)-ACK feedback enabling information in control information, a receive-end user feeds back corresponding ACK/NACK information based on a current PSSCH decoding result.

Currently, a PSFCH resource is semi-statically configured. The PSFCH may be a feedback for physical sidelink shared channel (physical sidelink shared channel, PSSCH) transmission, or may be a feedback for physical sidelink control channel (physical sidelink control channel, PSCCH) transmission. An example in which PSFCH transmission is a feedback for PSSCH transmission is used for description. The PSFCH resource may be determined based on parameters such as a time-frequency resource occupied by PSSCH transmission, a minimum interval between the PSFCH and a PSSCH corresponding to the PSFCH, and a PSFCH periodicity. Parameters such as the PSFCH periodicity and the minimum interval between the PSFCH and the PSSCH corresponding to the PSFCH are preconfigured or configured by a network in a resource pool. After the configured parameters are determined, a position of the PSFCH resource is also determined.

Currently, PSFCH transmission corresponding to one PSCCH/PSSCH occupies one physical resource block (physical resource block, PRB). However, in an unlicensed band, due to impact of power spectral density (power spectral density, PSD), a transmit power for information transmission on a single PRB is limited. For example, the transmit power for information transmission on the single PRB cannot exceed 10 decibels relative to one milliwatt (decibel relative to one milliwatt, dBm)/megahertz (megahertz, MHz). Consequently, a transmit power for PSFCH transmission is low, and quality of PSFCH transmission is poor.

**In** conclusion, how to improve quality of sidelink feedback channel transmission is an urgent problem to be resolved.

### SUMMARY

This application provides a sidelink feedback information transmission method, an apparatus, a chip system, and a storage medium, to improve a transmit power of sidelink feedback information, and further improve quality of sidelink feedback channel transmission.

**According to a first aspect,** this application provides a sidelink feedback information transmission method. The method is performed by a terminal apparatus or a module (a chip system) in the terminal apparatus. Herein, an example in which a first terminal apparatus performs the method is used for description. The method includes:

The first terminal apparatus determines a first frequency domain resource set based on first configuration information, where frequency domain resource units in the first frequency domain resource set belong to a plurality of interlaces, the first frequency domain resource set includes a plurality of resource subsets, the resource subset includes at least one frequency domain resource unit, the plurality of resource subsets include a first resource subset, and frequency domain resource units in the first resource subset belong to a same interlace. The first terminal apparatus sends first sidelink feedback information in the first resource subset.

In a possible implementation, the first terminal apparatus determines a first frequency domain resource set based on first configuration information, where $M_{\mathrm{PRB,\ set}}^{\mathrm{PSFCH}}$ frequency domain resource units in the first frequency domain resource set belong to a plurality of interlaces, the first frequency domain resource set includes $M_{\mathrm{RBG}}^{\mathrm{PSFCH}}$ resource subsets, the resource subset includes at least one frequency domain resource unit, the $M_{\mathrm{RBG}}^{\mathrm{PSFCH}}$ resource subsets include a first resource subset, frequency domain resource units in the first resource subset belong to a same interlace, and $M_{\mathrm{RBG}}^{\mathrm{PSFCH}}$ and $M_{\mathrm{PRB,\ set}}^{\mathrm{PSFCH}}$ are positive integers. The first terminal apparatus sends first sidelink feedback information in the first resource subset. In the implementation, $M_{\mathrm{PRB,\ set}}^{\mathrm{PSFCH}}$ may be considered as a quantity of frequency domain resource units in the first frequency domain resource set, and $M_{\mathrm{RBG}}^{\mathrm{PSFCH}}$ may be considered as a quantity of resource subsets included in the first frequency domain resource set.

Because the first resource subset includes the plurality of frequency domain resource units, the first terminal apparatus may send the first sidelink feedback information on the plurality of frequency domain resource units in the first resource subset. In this way, a total transmit power of the first sidelink feedback information can be increased, to improve transmission quality of sidelink feedback information.

In a possible implementation, frequency domain resource units that belong to a same interlace in the first frequency domain resource set are contiguously distributed in the first frequency domain resource set.

In this way, the first terminal apparatus may obtain resource subsets through division more conveniently based on an order of the frequency domain resource units in the first frequency domain resource set when a condition that frequency domain resource units in one resource subset belong to a same interlace is met. The solution can reduce complexity of a resource subset division process.

In a possible implementation, the frequency domain resource units in the first frequency domain resource set are arranged based on indexes of the plurality of interlaces; and/or the frequency domain resource units in the first frequency domain resource set are arranged based on an index of a frequency domain resource unit in an interlace.

The solution provides a solution for sorting the frequency domain resource units in the first frequency domain resource set. In this way, apparatuses may determine resource subsets based on the solution for sorting the frequency domain resource units in the first frequency domain resource set, so that indexes of frequency domain resource units included in resource subsets with a same index that are obtained by the apparatuses through division are the same. It can be learned that a rule provided in the solution provides technical support for communication between a plurality of apparatuses based on resources in the first frequency domain resource set.

In a possible implementation, indexes of the resource subsets in the first frequency domain resource set are sorted in ascending or descending order in the first frequency domain resource set.

The solution provides a manner of determining an index of a resource subset. The first terminal apparatus may sequentially determine the indexes of the resource subsets for the determined resource subsets based on the solution for sorting the frequency domain resource units in the first frequency domain resource set, so that indexes of frequency domain resource units included in resource subsets with a same index that are obtained by the apparatuses through division are the same. It can be learned that a rule provided in the solution provides technical support for communication between a plurality of apparatuses based on resources in the first frequency domain resource set.

In a possible implementation, a quantity of frequency domain resource units in the first frequency domain resource set that belong to one interlace is an integer multiple of a quantity of frequency domain resource units in the first resource subset. In this way, a frequency domain resource unit that is not classified into a resource subset is absent in the interlace. Therefore, a waste of frequency domain resource units can be reduced.

In a possible implementation, one of the plurality of interlaces is the first resource subset. In the solution, one interlace may be directly considered as one resource subset. In this way, the first terminal apparatus may not need to perform resource subset division. Therefore, processing complexity of the first terminal apparatus can be reduced.

In a possible implementation, the frequency domain resource units in the first frequency domain resource set include a frequency domain resource unit in a resource pool, for example, may include frequency domain resource units in a plurality of resource block sets in the resource pool. In the implementation, it may also be understood as that in the solution provided in this embodiment of this application, frequency domain resource units may be divided into resource subsets based on a granularity of the resource pool.

In another possible implementation, the frequency domain resource units in the first frequency domain resource set include a frequency domain resource unit in a resource block set in a resource pool. In the implementation, it may also be understood as that in the solution provided in this embodiment of this application, frequency domain resource units may be divided into resource subsets based on a granularity of the resource block set. In this way, in a PSSCH slot associated with one PSFCH slot, a sub-channel for transmitting a PSSCH/PSCCH and a feedback resource of the sub-channel belong to a same resource block set, that is, transmission of feedback information belongs to the resource block set occupied by the PSSCH/PSCCH. In this way, an unlicensed band channel occupancy time (channel occupancy time, COT) sharing rule can be effectively used, and a PSFCH feedback success probability can be improved.

In a possible implementation, the first terminal apparatus may determine, based on a quantity of resource subsets, a first quantity, and a quantity of PSSCH slots associated with one PSFCH slot, a quantity of resource subsets corresponding to a sub-channel in a slot in the PSSCH slots. The first quantity is a quantity of sub-channels included in at least one resource block set in the resource pool. In this way, resource subsets may be allocated to time-frequency resources corresponding to PSSCH transmission as evenly as possible. In addition, this allocation manner is proper and is more compatible with a conventional technology.

In a possible implementation, the first quantity includes a quantity of sub-channels in the resource pool. For example, when the frequency domain resource units in the first frequency domain resource set include the frequency domain resource unit in the resource block set in the resource pool, the first quantity may be understood as the quantity of sub-channels in the resource pool. For example, the first quantity is a quantity of sub-channels in a plurality of resource block sets in the resource pool. For another example, the first quantity is a total quantity of all sub-channels in the resource pool.

In another possible implementation, the first quantity includes a quantity of sub-channels in the resource block set. For example, when the frequency domain resource units in the first frequency domain resource set include the frequency domain resource unit in the resource block set in the resource pool, the first quantity may be understood as the quantity of sub-channels in the resource block set in the resource pool. For example, the first quantity is a quantity of sub-channels in the resource block set in the resource pool. For another example, the first quantity is a total quantity of all sub-channels in the resource block set in the resource pool.

In a possible implementation, the first terminal apparatus receives first sidelink information, where the first sidelink feedback information is feedback information corresponding to the first sidelink information. The first terminal apparatus determines at least one resource subset based on indexes of a sub-channel and a slot that are occupied by the first sidelink information, the quantity of PSSCH slots associated with the PSFCH slot, and the quantity of resource subsets corresponding to the sub-channel in the slot in the PSSCH slots, where the at least one resource subset includes the first resource subset.

In the solution, a frequency domain resource granularity determined by the first terminal apparatus is the resource subset rather than the frequency domain resource unit. Based on sub-channel and slot allocation, the resource subsets can be allocated more properly and a waste of resources can be reduced. In addition, determining the at least one corresponding resource subset based on the indexes of the sub-channel and the slot is better compatible with the conventional technology.

In a possible implementation, the first terminal apparatus determines a quantity of sidelink feedback channel resources in a first resource set based on second configuration information, a quantity of cyclic shift pairs, and the quantity of resource subsets corresponding to the sub-channel in the slot in the PSSCH slots. The PSSCH slot in the solution may be understood as a PSSCH slot associated with one PSFCH slot, and the quantity of resource subsets corresponding to the sub-channel in the slot in the PSSCH slot may be understood as a quantity of resource subsets corresponding to a sub-channel in one of these PSSCH slots.

In this application, the quantity of sidelink feedback channel resources in the first resource set may also be understood as a quantity of available sidelink feedback channel resources in the first sidelink information.

In this way, the quantity of sidelink feedback channel resources in the first resource set may be determined in two dimensions: a code domain and a frequency domain, to provide more selectable resources for the first terminal apparatus. In addition, in the solution, a granularity of the first resource set in frequency domain is a resource subset, and a granularity of the first resource set in code domain is a quantity of cyclic shift pairs. The solution is more compatible with the conventional technology.

In a possible implementation, the first terminal apparatus determines a quantity of sidelink feedback channel resources in a first resource set based on second configuration information, a second quantity, a quantity of cyclic shift pairs, and the quantity of resource subsets corresponding to the sub-channel in the slot in the PSSCH slots. The second quantity is determined based on the second configuration information and/or a quantity of sub-channels occupied by the first sidelink information.

In this way, the second configuration information may indicate a quantity of frequency domain resource units that may be multiplexed for the first sidelink feedback information. Therefore, the first terminal apparatus may determine, based on different configurations of the second configuration information, the quantity of sidelink feedback channel resources in the first resource set (that is, a quantity of sidelink feedback channel resources corresponding to the first sidelink information). For example, the second configuration information indicates that a feedback resource corresponding to the first sidelink information is a PSFCH feedback resource corresponding to a plurality of sub-channels occupied by the first sidelink feedback information. In this way, when a plurality of terminal apparatuses all need to perform feedback for the first sidelink information, feedback resources of the plurality of terminal apparatuses do not conflict with each other. In this way, a quantity of multicast members of a multicast type 2 that can be supported by the resource pool is also affected. In addition, this is also more compatible with the conventional technology.

In a possible implementation, the first terminal apparatus determines a quantity of sidelink feedback channel resources in a first resource set based on second configuration information, a second quantity, a quantity of cyclic shift pairs, and a quantity of first resource subsets. The second quantity includes a total quantity of sub-channels occupied by the first sidelink information in the plurality of resource block sets. The quantity of first resource subsets includes a total quantity of resource subsets corresponding to the sub-channels occupied by the first sidelink information in the plurality of resource block sets, and the quantity of first resource subsets is determined based on the quantity of resource subsets corresponding to the sub-channel in the slot in the PSSCH slots. In actual application, the first sidelink information may cross a plurality of resource block sets. In this case, in the solution provided in this embodiment of this application, a sufficient quantity of sidelink feedback channel resources may be allocated to the first terminal apparatus more properly.

In a possible implementation, the first terminal apparatus determines, from the first resource set based on a first identifier, a second identifier, and the quantity of sidelink feedback channel resources in the first resource set, an index of a sidelink feedback channel resource corresponding to the first sidelink information. The first identifier includes a physical layer source identifier of the first sidelink information, and the second identifier includes an identifier of the first terminal apparatus and/or a predefined value. The solution is more compatible with the conventional technology.

In a possible implementation, the plurality of interlaces include a common feedback resource. The first terminal apparatus sends second sidelink feedback information on the common feedback resource.

In a possible implementation, the first sidelink information belongs to a first COT. The first terminal apparatus sends the second sidelink feedback information on the common feedback resources included in all resource block sets in the first COT; or the first sidelink information occupies a plurality of resource block sets included in the first COT, and the first terminal apparatus sends the second sidelink feedback information on the common feedback resources included in the plurality of resource block sets.

Because the first terminal apparatus not only sends the first sidelink feedback information on the first resource subset, but also sends the second sidelink feedback information on the common feedback resource, and the first sidelink feedback information and the second sidelink feedback information occupy a same time domain resource, the solution can further improve a possibility of meeting an OCB requirement.

In a possible implementation, frequency domain resource units in the plurality of resource subsets include a frequency domain resource unit other than the common feedback resource.

Because the common feedback resource cannot be allocated to a user to transmit dedicated (non-common) feedback information, and the common feedback resource is not divided into the resource subset, the common feedback resource may not be considered in a process in which the first terminal apparatus performs resource subset division for each sub-channel, to reduce complexity of the process.

In a possible implementation, the first configuration information includes a bitmap, and a bit corresponding to a frequency domain resource unit in the common feedback resource in the bitmap is 1 or 0. In this way, this is more compatible with the conventional technology. In this application, a bit in the bitmap may be associated with a resource in a resource block set in the resource pool; or a bit in the bitmap may be associated with a resource (for example, a resource in the plurality of resource block sets in the resource pool) in the resource pool. It may also be understood as that the bitmap may be indicated based on a granularity of the resource block set, or may be indicated based on a granularity of the resource pool.

In a possible implementation, the first configuration information includes a bitmap, and a bit corresponding to a frequency domain resource unit in an interlace adjacent to the common feedback resource is 0 in the bitmap. In this way, interference caused by a signal on the common feedback resource to a valid feedback signal can be reduced.

In a possible implementation, the first configuration information includes a bitmap, and a bit corresponding to a frequency domain resource unit in the plurality of resource subsets is 1 in the bitmap.

In a possible implementation, one frequency domain resource unit includes one PRB. In a possible implementation, the first sidelink feedback information includes feedback information or conflict indication information.

**According to a second aspect,** this application provides a sidelink feedback information transmission method. The method is performed by a terminal apparatus or a module (a chip system) in the terminal apparatus. Herein, an example in which a second terminal apparatus performs the method is used for description. The method includes:

The second terminal apparatus determines a first frequency domain resource set based on first configuration information, where frequency domain resource units in the first frequency domain resource set belong to a plurality of interlaces, the first frequency domain resource set includes a plurality of resource subsets, the resource subset includes at least one frequency domain resource unit, the plurality of resource subsets include a first resource subset, and frequency domain resource units in the first resource subset belong to a same interlace. The second terminal apparatus receives first sidelink feedback information in the first resource subset.

In a possible implementation, the second terminal apparatus determines a first frequency domain resource set based on first configuration information. $M_{\mathrm{PRB,\ set}}^{\mathrm{PSFCH}}$ frequency domain resource units in the first frequency domain resource set belong to a plurality of interlaces, the first frequency domain resource set includes $M_{\mathrm{RBG}}^{\mathrm{PSFCH}}$ resource subsets, the resource subset includes at least one frequency domain resource unit, the $M_{\mathrm{RBG}}^{\mathrm{PSFCH}}$ resource subsets include a first resource subset, frequency domain resource units in the first resource subset belong to a same interlace, and $M_{\mathrm{RBG}}^{\mathrm{PSFCH}}$ and $M_{\mathrm{PRB,\ set}}^{\mathrm{PSFCH}}$ are positive integers. The second terminal apparatus receives first sidelink feedback information in the first resource subset. In the implementation, $M_{\mathrm{PRB,\ set}}^{\mathrm{PSFCH}}$ may be considered as a quantity of frequency domain resource units in the first frequency domain resource set, and $M_{\mathrm{RBG}}^{\mathrm{PSFCH}}$ may be considered as a quantity of resource subsets included in the first frequency domain resource set.

In a possible implementation, the second terminal apparatus sends first sidelink information, where the first sidelink feedback information is feedback information corresponding to the first sidelink information; and determines at least one resource subset based on indexes of a sub-channel and a slot that are occupied by the first sidelink information, where the at least one resource subset includes the first resource subset.

In a possible implementation, the plurality of interlaces include a common feedback resource, and the second terminal apparatus may further receive second sidelink feedback information on the common feedback resource.

For a related solution (for example, a related solution for determining the first frequency domain resource set by the second terminal apparatus) and beneficial effects of the second aspect, refer to the related descriptions of the first aspect. Details are not described again.

**According to a third aspect,** this application provides a sidelink feedback information transmission method. The method is performed by a terminal apparatus or a module (a chip system) in the terminal apparatus. The method is applicable to a first terminal apparatus, or is applicable to a second terminal apparatus. Herein, an example in which the first terminal apparatus performs the method is used for description. The method includes:

The first terminal apparatus (or the second terminal apparatus) determines a first sub-channel in a resource pool based on third configuration information. The first sub-channel includes a frequency domain resource unit in a guard band, and the first sub-channel further includes a frequency domain resource unit in at least one resource block set. The first terminal apparatus (or the second terminal apparatus) determines a sidelink feedback channel resource corresponding to the first sub-channel, where the sidelink feedback channel resource is used to transmit sidelink feedback information.

For this type of channel: the first sub-channel, a status of the sidelink feedback channel resource of the first sub-channel is specified. Therefore, a unified standard can be used, and subsequent communication can be performed smoothly.

In addition, the solution provides a mapping relationship between a PSSCH and a PSFCH in a same resource block set in a continuous resource allocation structure. In this way, a COT sharing rule can be effectively used, and a PSFCH feedback success probability can be improved.

In a possible implementation, the first terminal apparatus (or the second terminal apparatus) determines, based on that the at least one resource block set is a first resource block set, that the first resource block set includes the sidelink feedback channel resource corresponding to the first sub-channel. It may also be understood as that all frequency domain resource units in the first sub-channel that belong to the resource block set belong to the first resource block set, and do not belong to another resource block set. In this case, the first terminal apparatus (or the second terminal apparatus) determines that the first resource block set includes the sidelink feedback channel resource corresponding to the first sub-channel.

Because all the frequency domain resource units in the first sub-channel that belong to the resource block set are in the first resource block set, when it is determined that the sidelink feedback channel resource corresponding to the first sub-channel is also in the first resource block set, PSSCH/PSCCH transmission on the first sub-channel and corresponding PSFCH transmission may be in a same resource block set, that is, the first resource block set. In this way, the COT sharing rule can be effectively used, and the PSFCH feedback success probability can be improved.

In a possible implementation, the first terminal apparatus (or the second terminal apparatus) determines that the at least one resource block set does not include the sidelink feedback channel resource corresponding to the first sub-channel.

Because the sub-channel further occupies a channel resource in the guard band, it is determined that the at least one resource block set does not include the sidelink feedback channel resource corresponding to the first sub-channel. In this way, for this type of channel: the first sub-channel, the status of the sidelink feedback channel resource of the first sub-channel is specified. Therefore, the unified standard can be used, and subsequent communication can be performed smoothly.

In a possible implementation, the at least one resource block set includes a plurality of resource block sets. The plurality of resource block sets include, for example, the first resource block set and a second resource block set. The first terminal apparatus (or the second terminal apparatus) may determine, based on at least one of a quantity of frequency domain resources occupied by the first sub-channel in a resource block set in the plurality of resource block sets (for example, a quantity of frequency domain resources occupied by the first sub-channel in the first resource block set and/or a quantity of frequency domain resources occupied by the first sub-channel in the second resource block set), a quantity of frequency domain resources occupied by the first sub-channel in the guard band, or an index of the first resource block set, the sidelink feedback channel resource corresponding to the first sub-channel.

Because the quantity of frequency domain resources occupied by the first sub-channel in the first resource block set and/or the index of the first resource block set are/is easy to obtain, the solution is simple and easy to implement.

In a possible implementation, it is determined, based on an index of a resource block set in a plurality of resource block sets, that a resource block set with a lowest index in the plurality of resource block sets includes the sidelink feedback channel resource corresponding to the first sub-channel; or it is determined, based on an index of a resource block set in a plurality of resource block sets, that a resource block set with a highest index in the plurality of resource block sets includes the sidelink feedback channel resource corresponding to the first sub-channel.

In a possible implementation, when a quantity of frequency domain resource units in the first sub-channel that belong to the first resource block set is greater than a quantity of frequency domain resource units in the first sub-channel that belong to a second resource block set, it is determined that the first resource block set includes the sidelink feedback channel resource corresponding to the first sub-channel; and/or when a quantity of frequency domain resource units included by the first sub-channel in the first resource block set is greater than a first value, it is determined that the first resource block set includes the sidelink feedback channel resource corresponding to the first sub-channel. The first value may include a quantity of frequency domain resource units occupied by a PSCCH in the resource pool, and the value may be determined by using a higher-layer parameter sl-SubchannelSize.

In a possible implementation, the at least one resource block set includes the first resource block set and the second resource block set. Determining the sidelink feedback channel resource corresponding to the first sub-channel includes: determining that the first resource block set includes the sidelink feedback channel resource corresponding to the first sub-channel; and determining that the second resource block set includes the sidelink feedback channel resource corresponding to the first sub-channel.

The implementation provided in the third aspect may be used in combination with the implementation provided in the first aspect or the second aspect. For example, after determining whether the resource block set includes a sidelink feedback channel resource corresponding to a sub-channel, the first terminal apparatus or the second terminal apparatus may perform the implementation provided in the first aspect or the second aspect.

In the implementation provided in the first aspect or the second aspect, the first terminal apparatus (or the second terminal apparatus) determines, based on a quantity of resource subsets, a first quantity, and a quantity of PSSCH slots associated with one PSFCH slot, a quantity of resource subsets corresponding to a sub-channel in a slot in the PSSCH slots.

The first quantity is a quantity of sub-channels included in the first resource block set, and the first quantity may also be understood as a quantity of sub-channels on which the first resource block set includes a corresponding sidelink feedback channel resource.

For example, when the first resource block set includes the sidelink feedback channel resource corresponding to the first sub-channel, it may be considered that the first sub-channel belongs to the sub-channel included in the first resource block set. Therefore, the first sub-channel needs to be considered when the first quantity is calculated, and the first quantity may also be understood as the quantity of sub-channels included in the first resource block set.

For nouns such as the resource subset in the solution, refer to the descriptions of related implementation in the first aspect. Details are not described again. The solution provides a possible example in which the implementation provided in the second aspect is used in combination with the related implementation of the first aspect.

**According to a fourth aspect,** this application provides a sidelink feedback information transmission method. The method is performed by a terminal apparatus or a module (a chip system) in the terminal apparatus. Herein, an example in which a first terminal apparatus performs the method is used for description. The method includes:

The first terminal apparatus receives first sidelink information, where the first sidelink information corresponds to a plurality of resource sets, and two of the plurality of resource sets do not overlap in frequency domain and/or time domain. The first terminal apparatus sends feedback information of the first sidelink information in at least one resource set.

In the solution, a plurality of feedback occasions may be provided for the first terminal apparatus, and one feedback occasion corresponds to one resource set. In this way, a success rate of feedback information transmission of the first terminal apparatus can be improved. The implementation provided in the fourth aspect may be used in combination with the implementation provided in the first aspect or the second aspect. For example, the first frequency domain resource set in the first aspect or the second aspect may be considered as a set including frequency domain resources in a resource set.

In a possible implementation, the first terminal apparatus sends the feedback information of the first sidelink information in a second resource set in the plurality of resource sets. If sending fails, the first terminal apparatus sends the feedback information of the first sidelink information in a third resource set in the plurality of resource sets.

**According to a fifth aspect,** this application provides a sidelink feedback information transmission method. The method is performed by a terminal apparatus or a module (a chip system) in the terminal apparatus. Herein, an example in which a second terminal apparatus performs the method is used for description. The method includes:

The second terminal apparatus sends first sidelink information, where the first sidelink information corresponds to a plurality of resource sets, and two of the plurality of resource sets do not overlap in frequency domain and/or time domain. The second terminal apparatus receives feedback information of the first sidelink information in at least one resource set.

In the solution, a plurality of feedback occasions may be provided for a first terminal apparatus, and the first terminal apparatus may send feedback information to the second terminal apparatus by using the plurality of feedback occasions, where one feedback occasion corresponds to one resource set. In this way, a success rate of feedback information transmission between the first terminal apparatus and the second terminal apparatus can be improved. The implementation provided in the fifth aspect may be used in combination with the implementation provided in the first aspect or the second aspect. For example, the first frequency domain resource set in the first aspect or the second aspect may be considered as a set including frequency domain resources in a resource set.

In a possible implementation, the second terminal apparatus receives the feedback information of the first sidelink information in a second resource set in the plurality of resource sets. If sending fails, the second terminal apparatus receives the feedback information of the first sidelink information in a third resource set in the plurality of resource sets.

**According to a sixth aspect,** a communication apparatus is provided. The communication apparatus may be the first terminal apparatus or the second terminal apparatus described above. The communication apparatus may include a communication unit and a processing unit, to perform any one of the first aspect to the fifth aspect or any possible implementation of the first aspect to the fifth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the fifth aspect or any possible implementation of the first aspect to the fifth aspect.

**According to a seventh aspect,** a communication apparatus is provided. The communication apparatus may be the first terminal apparatus or the second terminal apparatus described above. The communication apparatus may include a processor and a memory, to perform any one of the first aspect to the fifth aspect or any possible implementation of the first aspect to the fifth aspect. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fifth aspect or any possible implementation of the first aspect to the fifth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to an eighth aspect,** a communication apparatus is provided. The communication apparatus may be the first terminal apparatus or the second terminal apparatus described above. The communication apparatus may include a processor, to perform any one of the first aspect to the fifth aspect or any possible implementation of the first aspect to the fifth aspect. The processor is coupled to a memory. Optionally, the communication apparatus further includes the memory. Optionally, the communication apparatus further includes a communication interface, and the processor is coupled to the communication interface.

In an implementation, when the communication apparatus is a first terminal apparatus or a second terminal apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a ninth aspect,** a system is provided. The system includes the first terminal apparatus described above.

In a possible implementation, the system may further include another terminal apparatus, for example, a second terminal apparatus.

**According to a tenth aspect,** a computer program product is provided. The computer program product includes a computer program (which may also be referred to as code or instructions). When the computer program is run, a computer is enabled to perform any one of the first aspect to the fifth aspect or any possible implementation of the first aspect to the fifth aspect.

**According to an eleventh aspect,** a computer-readable storage medium is provided. The computer-readable medium stores a computer program (which may also be referred to as code or instructions). When the computer program is run on a computer, the computer is enabled to perform any one of the first aspect to the fifth aspect or any possible implementation of the first aspect to the fifth aspect.

**According to a twelfth aspect,** a chip system is provided. The chip system may include a processor. The processor is coupled to a memory, and may be configured to perform any one of the first aspect to the fifth aspect or any possible implementation of the first aspect to the fifth aspect. Optionally, the chip system further includes a memory. The memory is configured to store a computer program (which may also be referred to as code or instructions). The processor is configured to invoke the computer program from the memory and run the computer program, so that a device on which the chip system is installed performs any one of the first aspect to the fifth aspect or any possible implementation of the first aspect to the fifth aspect.

**According to a thirteenth aspect,** a processing apparatus is provided, including an interface circuit and a processing circuit. The interface circuit may include an input circuit and an output circuit. The processing circuit is configured to receive a signal through the input circuit, and transmit a signal through the output circuit, so that any one of the first aspect to the fifth aspect or any possible implementation of the first aspect to the fifth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a first terminal apparatus or a second terminal apparatus, the interface circuit may be a radio frequency processing chip in the first terminal apparatus or the second terminal apparatus, and the processing circuit may be a baseband processing chip in the first terminal apparatus or the second terminal apparatus.

In another implementation, the communication apparatus may be a part of components in the first terminal apparatus or the second terminal apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

## BRIEF DESCRIPTION OF DRAWINGS

FIG. 1 is a diagram of a structure of a channel according to an embodiment of this application;
FIG. 2 is a diagram of a structure of a resource pool according to an embodiment of this application;
FIG. 3A, FIG. 3B, and FIG. 3C each are a diagram of an architecture of a communication system according to an embodiment of this application;
FIG. 4 is a possible schematic flowchart of a sidelink feedback information transmission method according to an embodiment of this application;
FIG. 5 is a diagram of resource block set division according to an embodiment of this application;
FIG. 6 is a diagram of a structure of a frequency domain resource according to an embodiment of this application;
FIG. 7 is a possible schematic flowchart of another sidelink feedback information transmission method according to an embodiment of this application;
FIG. 8 shows a possible example of a resource configuration according to an embodiment of this application;
FIG. 9 is a possible diagram of a PSFCH resource according to an embodiment of this application;
FIG. 10 is a possible diagram of a PSFCH resource according to an embodiment of this application;
FIG. 11 is a possible diagram of PSFCH transmission according to an embodiment of this application;
FIG. 12 is a possible schematic flowchart of another sidelink feedback information transmission method according to an embodiment of this application;

FIG. 13 is a diagram of a resource pool according to an embodiment of this application;

FIG. 14 is a diagram of another resource pool according to an embodiment of this application;

FIG. 15 is a possible schematic flowchart of another sidelink feedback information transmission method according to an embodiment of this application;

FIG. 16 is a possible diagram of a plurality of feedback occasions of a terminal according to an embodiment of this application;

FIG. 17 is a diagram of a structure of a communication apparatus according to an embodiment of this application; and

FIG. 18 is a diagram of a structure of a communication apparatus according to an embodiment of this application.

## DESCRIPTION OF EMBODIMENTS

The following describes nouns and terms used in this application.

(1) Resource pool

The resource pool (resource pool) may also be referred to as an SL resource pool. Optionally, the resource pool may be preconfigured, or may be configured by a network. For example, within network coverage, a network apparatus sends resource pool information to a terminal apparatus in a current cell via a system information block (system information block, SIB), cell-specific (cell-specific) radio resource control (radio resource control, RRC) signaling, or user-specific (UE-specific) RRC signaling. The resource pool information indicates the resource pool. Alternatively, the resource pool may be predefined.

In an unlicensed band, before performing communication, a terminal apparatus contends for a channel in a listen before talk (listen before talk, LBT) manner. After the terminal apparatus successfully accesses the channel, a sum of a time of occupying the channel by the terminal apparatus and a time occupied by the terminal apparatus sharing the channel with another terminal apparatus is referred to as a COT.

In an SL, a resource pool used for data transmission may be preconfigured, and one resource pool may include one or more channels. In an implementation, a bandwidth size of each channel is 20 MHz. When one resource pool includes one channel, resource blocks included in the resource pool are resource blocks corresponding to a resource block (resource block, RB) set (set) in the channel. In some content of embodiments of this application, the resource block set is abbreviated as an RB set, and the RB set in this specification may also be replaced with the resource block set.

For example, as shown in FIG. 1, in an unlicensed band, a channel includes an RB set and guard bands located at two ends, and the guard band is used to ensure that a signal/energy on a current channel does not cause interference to an adjacent channel. A frequency domain resource in the RB set may be used for data transmission.

If one resource pool includes a plurality of channels, the resource pool includes an RB set and a resource block in a partial guard band. For example, as shown in FIG. 2, a channel 1 includes an RB set 1, and a channel 2 includes an RB set 2. In this case, a resource pool includes the RB set 1, the RB set 2, and a guard band between the RB set 1 and the RB set 2. When a terminal apparatus successfully performs LBT on the two channels, and needs to send data in the two RB sets, resources available to the terminal apparatus include not only resources on the RB sets in the two channels, but also the guard band between the two adjacent RB sets.

A communication method provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. The communication method provided in embodiments of this application may be further applied to fields such as vehicle-to-everything (vehicle-to-everything, V2X) communication, the internet of vehicles, autonomous driving, and assisted driving.

The method and an apparatus provided in embodiments of this application are based on a same or similar technical concept. Because problem resolving principles of the method and the apparatus are similar, mutual reference may be made to implementations of the apparatus and the method. Repeated descriptions are not described.

The following first describes some terms in embodiments of this application, to facilitate understanding of a person skilled in the art.

In embodiments of this application, a network apparatus may also be referred to as a network device, and the network apparatus may be a device in a wireless network. For example, the network apparatus may be a radio access network (radio access network, RAN) node that connects a terminal to the wireless network, and may also be referred to as an access network device. The network apparatus includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), and a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the network apparatus may be a network apparatus in a 5G mobile communication system, for example, a next generation NodeB (next generation NodeB, gNB), a transmission reception point (transmission reception point, TRP), or a TP in an NR system, or one antenna panel or one group of antenna panels (including a plurality of antenna panels) of a base station in the 5G mobile communication system. Alternatively, the network apparatus may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in the architecture, higher layer signaling (for example, RRC layer signaling) may also be considered to be sent by the DU, or sent by the DU and the AAU. It may be understood that the network apparatus may be a device including one or more of a CU node, a DU node, and an AAU node. In addition, the CU may be classified as a network device in a RAN, or the CU may be classified as a network apparatus in a core network (core network, CN). This is not limited in this application.

A terminal apparatus in embodiments of this application may be a wireless terminal apparatus that can receive scheduling and indication information from the network apparatus. The terminal apparatus may be a terminal (the terminal in this application may also be referred to as a terminal device), or may be user equipment (user equipment, UE), a mobile station (mobile station, MS), a mobile terminal (mobile terminal, MT), or the like. The terminal apparatus may be a device that includes a wireless communication function (providing voice/data connectivity to a user), for example, a handheld device, a vehicle-mounted device, or a vehicle-mounted module that has a wireless connection function. Currently, some examples of the terminal apparatus are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, a telematics box (also referred to as a vehicle-mounted sending unit) (telematics box, T-box), a machine-to-machine/machine-type communications (machine-to-machine/machine-type communications, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper, a speaker, a set-top box, or the like.

In this application, predefined content is usually defined in a standard, does not need to be configured by another device, and is information recorded/written in advance in hardware and/or software of the terminal, or may be understood as information that cannot be changed by a network device or another terminal. Preconfigured content is usually information recorded/written in advance in hardware and/or software of the terminal, is determined by a factory device vendor, and may be changed by using software or hardware.

A (pre)configuration may be classified into a network apparatus (pre)configuration and a terminal apparatus (pre) configuration. If a (pre)configuration is a network apparatus (pre)configuration, the (pre)configuration may be performed based on a system information block (system information block, SIB) or RRC signaling. If a (pre)configuration is a terminal apparatus (pre)configuration, the (pre)configuration may be performed based on PC5-RRC signaling.

This application is applicable to a scenario in which sidelink communication is supported, and supports a communication scenario with network coverage and a communication scenario without network coverage. A sidelink may also be referred to as a SL in this application. **FIG. 3A, FIG. 3B, and FIG. 3C** each are a diagram of an architecture of a communication system applicable to this application. In FIG. 3A, both a terminal apparatus A and a terminal apparatus B are within signal coverage of a network apparatus. In FIG. 3B, the terminal apparatus A is within signal coverage of the network apparatus, but the terminal apparatus B is outside the signal coverage of the network apparatus. In FIG. 3C, both the terminal apparatus A and the terminal apparatus B are outside signal coverage of the network apparatus.

The terminal apparatus A and the terminal apparatus B in FIG. 3A and FIG. 3B may communicate with each other on a sidelink by using a resource scheduled by the network apparatus. Alternatively, a terminal apparatus may perform resource self-selection between the terminal apparatus A and the terminal apparatus B, that is, select a resource for sidelink communication from a resource pool.

Both the terminal apparatus A and the terminal apparatus B in FIG. 3C are outside the signal coverage of the network apparatus, and therefore can communicate with each other only on the sidelink in a resource self-selection manner.

The following first describes related technical features in embodiments of this application. It should be noted that, these explanations are intended to make embodiments of this application easier to understand, but should not be construed as a limitation on the protection scope claimed in this application.

Based on the embodiments shown in FIG. 1, FIG. 2, FIG. 3A, FIG. 3B, and FIG. 3C and the foregoing other content, FIG. 4 is a diagram of an example of a sidelink feedback information transmission method according to an embodiment of this application. A first terminal apparatus and/or a second terminal apparatus in FIG. 4 may be a terminal or a module (for example, a chip) in the terminal shown. When this application is applied to the networks shown in FIG. 3A, FIG. 3B, and FIG. 3C, the first terminal apparatus and the second terminal apparatus may be respectively the terminal apparatus A and the terminal apparatus B in the figures. For example, the first terminal apparatus is the terminal apparatus A, and the second terminal apparatus is the terminal apparatus B. For another example, the first terminal apparatus is the terminal apparatus B, and the second terminal apparatus is the terminal apparatus A.

As shown in FIG. 4, the method includes the following steps.

**Step 401:** The second terminal apparatus sends first sidelink information.

Correspondingly, the first terminal apparatus receives the first sidelink information on a first sidelink resource.

In this embodiment of this application, information transmitted on a sidelink may be referred to as sidelink information (for example, the first sidelink information). For example, the sidelink information may include sidelink control information (sidelink control information, SCI) and/or sidelink data. It may be understood that the sidelink information may alternatively include other possible information. In this embodiment of this application, an example in which the sidelink information includes the SCI and/or the sidelink data is used for description.

The SCI may be carried on a PSCCH and/or a PSSCH, and the sidelink data may be carried on a PSSCH.

The first sidelink resource may include a resource occupied by PSSCH transmission and/or a resource occupied by PSCCH transmission.

Step 401 may be an optional step. In the method in FIG. 4, step 401 may not be performed.

**Step 402:** The first terminal apparatus determines a first frequency domain resource set based on first configuration information.

**Step 403:** The second terminal apparatus determines the first frequency domain resource set based on the first configuration information.

In this embodiment of this application, a solution in which the first terminal apparatus determines the first frequency domain resource set. In this embodiment of this application, a process in which the first terminal apparatus determines the first frequency domain resource set is used as an example for description. A related operation of the second terminal apparatus is similar to that of the first terminal apparatus, and details are not described again.

In this embodiment of this application, the first frequency domain resource set includes one or more frequency domain resource units. These frequency domain resource units may belong to (or include) one or more interlaces. These frequency domain resource units may alternatively be divided into one or more resource subsets, or in other words, these frequency domain resource units include one or more resource subsets. The following content is used for description.

(1) Frequency domain resource unit

In a possible implementation, the first configuration information includes a bitmap, and the bitmap is used to identify a frequency domain resource unit set used for PSFCH transmission, that is, the first frequency domain resource set.

In this embodiment of this application, the frequency domain resource unit in the first frequency domain resource set may be a resource that is in an RB set and that may be used for PSFCH transmission. For example, a bit in the bitmap in the first configuration information is associated with a frequency domain resource unit in the RB set, a leftmost bit in the bitmap in the first configuration information indicates a lowest index of a frequency domain resource unit in the RB set, and so on. For example, if a frequency domain resource unit may be used for PSFCH transmission, a value of the bit is 1. If a frequency domain resource unit is not used for PSFCH transmission, a value of the bit may be 0. In this case, a quantity of bits in the bitmap is equal to a quantity of PRBs included in the RB set.

In another possible implementation, the frequency domain resource unit in the first frequency domain resource set in this embodiment of this application may be a resource that is in a resource pool (or a plurality of RB sets in the resource pool) and that may be used for PSFCH transmission. For example, a bit in the bitmap in the first configuration information is associated with a frequency domain resource unit in the resource pool (or the plurality of RB sets in the resource pool), a leftmost bit in the bitmap in the first configuration information indicates a lowest index of a frequency domain resource unit in the resource pool, and so on. For example, if a frequency domain resource unit may be used for PSFCH transmission, a value of the bit is 1. If a frequency domain resource unit is not used for PSFCH transmission, a value of the bit may be 0. In this case, a quantity of bits in the bitmap is equal to a quantity of PRBs included in the resource pool.

PSFCH transmission in this embodiment of this application may also be replaced with another name, for example, feedback information transmission. The feedback information in this embodiment of this application may also be understood as information transmitted on a PSFCH. The feedback information may also be replaced with another name, for example, sidelink feedback information. PSFCH transmission may include transmission of ACK/NACK information, and may also include transmission of a conflict indication. The sidelink feedback information in this application may be further used for subsequent transmission of other feedback information, for example, feedback information related to a beam.

In this embodiment of this application, the frequency domain resource unit in the first frequency domain resource set may be understood as a defined frequency domain granularity. For example, one frequency domain resource unit may be one PRB.

In this embodiment of this application, the frequency domain resource unit includes an index. For example, 0 in a PRB #0 may be considered as an index of the PRB #0, and 1 in a PRB #1 may be considered as an index of the PRB #1. There may be a value relationship between indexes of frequency domain resource units. For example, in the PRB #0 and the PRB #1, it may be considered that the index 1 is greater than the index 0, and correspondingly, a frequency domain position of the PRB #1 is higher than a frequency domain position of the PRB #0. When the frequency domain resource units are sorted in ascending order of the indexes of the frequency domain resource units (for example, a sequence of the frequency domain resource units includes PRB #0-PRB #1-PRB #2), it may be considered that the frequency domain resource units are sorted in ascending order of the indexes of the frequency domain resource units. On the contrary, when the frequency domain resource units are sorted in descending order of the indexes of the frequency domain resource units (for example, a sequence of the frequency domain resource units includes PRB #2-PRB #1-PRB #0), it may be considered that the frequency domain resource units are sorted in descending order of the indexes of the frequency domain resource units.

**(2)** Interlace

Resource blocks in an SL bandwidth part (bandwidth part, BWP) are divided into M subsets in an interlace manner. Correspondingly, resource blocks in a resource pool (RB set) are divided into M subsets. In the implementation, in resource blocks included in each subset, two adjacent resource blocks are separated by M resource blocks, and M is a positive integer. In the implementation, each subset may be referred to as an interlace. It is assumed that an index of an interlace (the index in this embodiment of this application may be replaced with an identifier) is m, where $m \in \{0,1, \dots , M-1\}$, and an index of a start resource block of a channel is 0. In this case, indexes of resource blocks included in the interlace in the channel are $\{m, M+m, 2M+m, 3M+m, \dots\}$. For example, as shown in **FIG. 5,** for a channel with a subcarrier spacing of 15 kHz, the channel includes 105 RBs. When M=10, indexes of resource blocks included in an interlace whose identifier is #0 in an RB set are {0, 10, 20, 30, ..., 100}, and indexes of resource blocks included in an interlace whose identifier is #1 in the RB set are {1, 11, 21, 31, ..., 101}. Other cases are deduced by analogy.

The frequency domain resource units in the first frequency domain resource set belong to a plurality of interlaces, for example, may belong to 5 or 10 interlaces. One interlace may include one or more frequency domain resource units, or it may be understood as that interlace indexes corresponding to frequency domain resource units belonging to a same interlace are the same. The interlace may also have another name, for example, interleaving or an interlaced resource block set.

One frequency domain resource unit may be divided into one interlace. Therefore, the frequency domain resource unit also corresponds to an index of the interlace. There may be a value relationship between indexes of interlaces. For example, in an interlace #0 and an interlace #1, it may be considered that an index 1 is greater than an index 0. In a possible implementation, the frequency domain resource units in the first frequency domain resource set are arranged based on indexes of the plurality of interlaces. When the frequency domain resource units are sorted in ascending order of the indexes of the interlaces (for example, a sequence of the frequency domain resource units includes a frequency domain resource unit in the interlace #0-a frequency domain resource unit in the interlace #1-a frequency domain resource unit in an interlace #2), it may be considered that the frequency domain resource units are sorted in ascending order of the indexes of the interlaces. On the contrary, when the frequency domain resource units are sorted in descending order of the indexes of the interlaces (for example, a sequence of the frequency domain resource units includes a frequency domain resource unit in an interlace #2-a frequency domain resource unit in the interlace #1-a frequency domain resource unit in the interlace #0), it may be considered that the frequency domain resource units are sorted in descending order of the indexes of the interlaces.

In a possible implementation, frequency domain resource units that belong to a same interlace in the first frequency domain resource set are contiguously distributed in the first frequency domain resource set. It may also be understood as that frequency domain resource units having a same interlace index in the first frequency domain resource set may be contiguously arranged together. In this way, the first terminal apparatus may obtain resource subsets through division more conveniently based on an order of the frequency domain resource units in the first frequency domain resource set when a condition that frequency domain resource units in one resource subset belong to a same interlace is met. The solution can reduce complexity of a resource subset division process.

Quantities of frequency domain resource units included in two interlaces in the first frequency domain resource set may be the same or may be different. For example, indexes of interlaces corresponding to frequency domain resource units at first eight positions in the first frequency domain resource set are all 0, and indexes of interlaces corresponding to frequency domain resource units at the following four consecutive positions are all 1.

In another possible implementation, the frequency domain resource units in the first frequency domain resource set are sequentially arranged based on an index of a frequency domain resource unit in an interlace. In the first frequency domain resource set, for all frequency domain resource units included in one interlace, these frequency domain resource units may also be sorted. For example, frequency domain resource units in one interlace are sorted in ascending or descending order of index numbers of these frequency domain resource units.

An example in which the frequency domain resource unit is a PRB is used. For example, when an SCS is 30 kHz, a sequence in the first frequency domain resource set includes PRB #0-PRB #5-PRB #10-PRB #15-PRB #20-PRB #25-PRB #40-PRB #45-RPB #1-PRB #6-PRB #41-PRB #46. Indexes of interlaces corresponding to the PRB #0, PRB #5, PRB #10, PRB #15, PRB #20, PRB #25, the PRB #40, and the PRB #45 are all 0. Indexes of interlaces corresponding to the RPB #1, the PRB #6, the PRB #41, and the PRB #46 are all 1. In this example, in the sequence, frequency domain resource units are first sorted in ascending order of indexes of interlaces, and then frequency domain resource units in each interlace are sorted in ascending order of indexes of frequency domain resource units. This example may also be described as follows: The frequency domain resource units are first sorted in ascending order of indexes of interlaces, and then sorted in ascending order of indexes of frequency domain resource units.

The solution provides a solution for sorting the frequency domain resource units in the first frequency domain resource set. In this way, apparatuses may determine resource subsets based on the solution for sorting the frequency domain resource units in the first frequency domain resource set, so that indexes of frequency domain resource units included in resource subsets with a same index that are obtained by the apparatuses through division are the same. It can be learned that a rule provided in the solution provides technical support for communication between a plurality of apparatuses based on resources in the first frequency domain resource set.

(3) Resource subset

The first frequency domain resource set includes a plurality of resource subsets. One resource subset may include one or more frequency domain resource units, or it may be understood as that resource subset indexes corresponding to frequency domain resource units included in a same resource subset are the same. The resource subset may also have another name, for example, a resource group or a resource block group (RB group, RBG).

The plurality of resource subsets include a first resource subset. Frequency domain resource units in the first resource subset belong to a same interlace. It may also be understood as that indexes of interlaces corresponding to all frequency domain resource units in the first resource subset are the same. The first resource subset may include a frequency domain resource in a feedback resource corresponding to a first sidelink resource. It may also be understood as that the first resource subset belongs to a frequency domain resource in a feedback resource corresponding to first sidelink information transmission (for example, PSSCH transmission and/or PSCCH transmission). The feedback resource in this embodiment of this application may also be referred to as a PSFCH resource.

In a possible implementation, the frequency domain resource units in the first frequency domain resource set may be first sorted in ascending order of indexes of interlaces, and then frequency domain resource units in each interlace are sorted in ascending order of indexes of frequency domain resource units. Then, the one or more frequency domain resource units (the plurality of frequency domain resource units belong to a same interlace) in the first frequency domain resource set are sequentially classified into one resource subset. Indexes of interlaces corresponding to a plurality of frequency domain resource units belonging to one resource subset are the same.

These resource subsets may correspond to indexes of the resource subsets, and the indexes of the resource subsets may also have a value relationship. For example, after a plurality of resource subsets are obtained through division based on sorting of the first frequency domain resource set, the indexes of the resource subsets may be allocated to the resource subsets based on a sequence of the resource subsets, and may be allocated in ascending (or descending) order. In this way, it may also be considered that the resource subsets are sorted in ascending (or descending) order in the first frequency domain resource set.

Quantities of frequency domain resource units included in two resource subsets in the first frequency domain resource set may be equal. In a possible implementation, quantities of frequency domain resources included in two resource subsets in the first frequency domain resource set are equal. In another possible implementation, a quantity of frequency domain resource units in the first frequency domain resource set that belong to one interlace is an integer multiple of a quantity of frequency domain resource units in one resource subset (for example, the first resource subset). For example, there are six frequency domain resource units in the first frequency domain resource set that belong to the interlace #0, and one frequency domain resource subset may include two frequency domain resource units. In this case, the frequency domain resource units in the interlace #0 may be divided into three frequency domain resource subsets.

In this embodiment of this application, a scheduling granularity of the PSFCH is a granularity of the resource subset. In other words, only a frequency domain resource unit that is classified into a resource subset can be scheduled, and can be used for PSFCH transmission. When a frequency domain resource unit that is not classified into a resource subset is present in one interlace, the frequency domain resource unit cannot be used. However, in the implementation, a quantity of frequency domain resource units in one interlace is an integer multiple of a quantity of frequency domain resource units in one resource subset. In this way, a frequency domain resource unit that is not classified into a resource subset is absent in the interlace. Therefore, a waste of frequency domain resource units can be reduced.

In another possible implementation, frequency domain resource units in the first frequency domain resource set that belong to one interlace may be considered as one resource subset. In the solution, one interlace may be directly considered as one resource subset. In this way, the first terminal apparatus may not need to perform resource subset division. Therefore, processing complexity of the first terminal apparatus can be reduced. For example, the frequency domain resource units in the first frequency domain resource set belong to four interlaces, and three of the four interlaces may be considered as three resource unit subsets. A remaining one interlace may be considered as one resource unit subset, or may not be considered as a resource subset, but is considered as a common interlace (content of this part is described in detail subsequently, and is not described herein). In the implementation, a resource subset index does not need to be allocated to a frequency domain resource unit in the first frequency domain resource set, and an interlace index may be directly used as the resource subset index.

**FIG.** 6 is a diagram of a structure of an example of a frequency domain resource according to an embodiment of this application. For ease of understanding, the following provides descriptions with reference to FIG. 6. It is assumed that a resource pool includes one RB set, and the RB set includes 50 PRBs. An example in which a frequency domain resource unit is a PRB is used in FIG. 6.

(a) in FIG. 6 shows an example of 50 PRBs, and indexes of the 50 PRBs are respectively a PRB #0 to a PRB #49. The 50 PRBs may belong to one RB set.

Refer to (a) in FIG. 6. The PRB #0 to the PRB #49 are sorted in ascending order of indexes of PRBs, and these PRBs are sequentially divided into five interlaces: an interlace #0, an interlace #1, an interlace #2, an interlace #3, and an interlace #4. An example of a bitmap #1 is further shown in (a) in FIG. 6. Bits in the bitmap #1 correspond to the 50 PRBs. In this example, when a bit is 1, a PRB corresponding to the bit is used for PSFCH transmission; or when a bit is 0, a PRB corresponding to the bit is not used for PSFCH transmission, for example, is not used to transmit HARQ-ACK information, and/or is not used to transmit conflict indication information.

The 50 PRBs in (a) in FIG. 6 are first sorted in ascending order of indexes of interlaces, and then frequency domain resource units in each interlace are sorted in ascending order of indexes of frequency domain resource units, to obtain a sequence shown in (b) in FIG. 6. It can be learned from (b) in FIG. 6 that frequency domain resource units in a same interlace are contiguous, and frequency domain resource units in one interlace are sorted in ascending order.

A PRB (which is a PRB corresponding to a bit whose bit value is 0 in the bitmap #1) that is not used for PSFCH transmission in (b) in FIG. 6 is deleted, to obtain a PRB sequence in (c) in FIG. 6. The PRB sequence in (c) in FIG. 6 may be considered as an example of a PRB sequence in the first frequency domain resource set. In (c) in FIG. 6, PRBs are first sorted in ascending order of indexes of interlaces, and then frequency domain resource units in each interlace are sorted in ascending order of indexes of frequency domain resource units.

Further, the PRBs in (c) in FIG. 6 may be sequentially numbered, and the number may be referred to as a virtual PRB index. In an example in FIG. 6, an example in which one resource subset includes two PRBs is used. The PRBs in (c) in FIG. 6 are sequentially divided into 10 resource subsets, and numbers are sequentially a resource subset #0 to a resource subset #9.

In this embodiment of this application, (b) in FIG. 6 provides a possible manner of obtaining (c) in FIG. 6 from (a) in FIG. 6. During implementation application, there are still many manners of obtaining (c) in FIG. 6 from (a) in FIG. 6. For example, a resource associated with a bit whose bit value is 0 in (a) in FIG. 6 may be first deleted, and then sorting is performed. In this embodiment of this application, (b) in FIG. 6 is set to make it easier for a reader to understand the solution. In actual application, (b) in FIG. 6 may not need to be set.

**Step 404:** The first terminal apparatus sends first sidelink feedback information in the first resource subset.

Correspondingly, the second terminal apparatus receives the first sidelink feedback information in the first resource subset.

Step 404 may also be understood as follows: The first terminal apparatus performs PSFCH transmission in the first resource subset, and PSFCH transmission may include the first sidelink feedback information.

The first sidelink feedback information may also be understood as feedback information corresponding to the first sidelink information. The first sidelink feedback information may include a conflict indication. The first sidelink feedback information may also include ACK/NACK information.

The first terminal apparatus may send the first sidelink feedback information on a plurality of frequency domain resource units in the first resource subset. For example, the first resource subset is the resource subset #0 in (c) in FIG. 6, and the first terminal apparatus may send the first sidelink feedback information on each frequency domain resource unit in the PRB #0 and the PRB #5. In this way, a total transmit power of the first sidelink feedback information can be increased, to improve transmission quality of the sidelink feedback information (for example, the PSFCH).

Based on the embodiments shown in FIG. 1, FIG. 2, FIG. 3A, FIG. 3B, FIG. 3C, FIG. 4, FIG. 5, and FIG. 6 and the foregoing other content, FIG. 7 is a diagram of an example of a method for determining a first frequency domain resource set by a first terminal apparatus according to an embodiment of this application. FIG. 7 may be considered as a possible implementation of step 402 in FIG. 4. In this embodiment of this application, a solution in which the first terminal apparatus determines the first frequency domain set is similar to a solution in which a second terminal apparatus determines the first frequency domain set. In this embodiment of this application, a process in which the first terminal apparatus determines the first frequency domain resource set is used as an example for description. A related operation of the second terminal apparatus is similar to that of the first terminal apparatus, and details are not described again.

For the first terminal apparatus and/or the second terminal apparatus in FIG. 7, refer to the related descriptions in FIG. 4. Details are not described again.

As shown in FIG. 7, the method includes the following steps.

**Step 701:** The first terminal apparatus determines a quantity of resources used for PSFCH transmission.

In this embodiment of this application, $M_{\mathrm{PRB,\ set}}^{\mathrm{PSFCH}}$ indicates a quantity of resources used for PSFCH transmission in a resource set #0, and details are not described again in other parts. The resource set #0 may be considered as the PRB #0 to the PRB #49 in (a) in FIG. 6. $M_{\mathrm{PRB,\ set}}^{\mathrm{PSFCH}}$ may be considered as a quantity of frequency domain resource units in the first frequency domain resource set, or may be considered as a quantity of PRBs shown in (c) in FIG. 6.

A bitmap (bitmap) of a PSFCH frequency domain resource is configured for a resource pool, to indicate whether a PRB on a frequency domain resource of the resource set #0 may be used as a PSFCH frequency domain resource. The bitmap may be considered as the bitmap #1 in (a) in FIG. 6.

There are two implementations in step 701. Descriptions are separately provided below in an implementation A1 and an implementation A2.

**Implementation A1:** A resource in the resource set #0 may be a resource in an RB set in the resource pool.

In this case, a value of $M_{\mathrm{PRB,\ set}}^{\mathrm{PSFCH}}$ is a quantity of resources used for PSFCH transmission in the RB set.

In the implementation, a feedback resource belonging to the RB set is allocated to a sub-channel belonging to the RB set, that is, sidelink transmission occupying a resource in the RB set and a feedback resource corresponding to the sidelink transmission belong to a same RB set. In this way, an unlicensed band COT sharing rule can be effectively used, and a PSFCH feedback success probability can be improved.

**Implementation A2:** A resource in the resource set #0 may be a resource in the resource pool, for example, may include resources in a plurality of RB sets.

The resource pool may include a plurality of RB sets. In this case, a value of $M_{\mathrm{PRB,\ set}}^{\mathrm{PSFCH}}$ is a quantity of resources used for PSFCH transmission in the resource pool. In this example, the value of $M_{\mathrm{PRB,\ set}}^{\mathrm{PSFCH}}$ may be a quantity of resources used for PSFCH transmission in the plurality of RB sets in the resource pool. Therefore, in the implementation, the value of $M_{\mathrm{PRB,\ set}}^{\mathrm{PSFCH}}$ may be greater than the value of $M_{\mathrm{PRB,\ set}}^{\mathrm{PSFCH}}$ determined in the implementation A1.

In the implementation, resource subsets may be obtained through division as a whole at a granularity of the resource pool. The resource pool may include a plurality of resource block sets. Therefore, the frequency domain resource units in the first frequency domain resource set may alternatively be frequency domain resource units from the plurality of resource block sets.

Refer to (a) in FIG. 6. A length of bit information included in the bitmap is equal to a quantity of PRBs in the resource set #0. 1 in the bitmap indicates that a corresponding PRB may be used as a PSFCH frequency domain resource, and 0 in the bitmap indicates that a corresponding PRB is not used for PSFCH transmission, for example, is not used to transmit HARQ-ACK information, and/or is not used to transmit conflict indication information.

The PSFCH frequency domain resource may be used for HARQ-ACK transmission, and the resource is indicated by an "sl-PSFCH-RB-Set" bitmap. A bit value in the bitmap is 1, indicating that a corresponding PRB may be used for HARQ-ACK feedback transmission. The PSFCH frequency domain resource may also be used to transmit a scheme 2 conflict indication, and the resource is indicated by an "sl-RB-SetPSFCH" bitmap. In the bitmap, 1 indicates that a corresponding PRB may be used for the scheme2 conflict indication. Positions with bit values of 1 in "sl-PSFCH-RB-Set" and "sl-RB-SetPSFCH" do not overlap.

In a possible implementation, a quantity of PRBs that may be used as the PSFCH frequency domain resource (for example, a quantity of bits whose bit value is 1 in the bitmap) may be an integer multiple of a quantity included in a resource subset. In this way, PRBs that can be used for PSFCH transmission may be used as much as possible, to reduce a waste of resources.

In another implementation, if a quantity of PRBs that may be used as the PSFCH frequency domain resource (for example, a quantity of bits whose bit value is 1 in the bitmap) is not an integer multiple of a quantity included in a resource subset, there may be some redundant PRBs, and these PRBs may not be classified into any resource subset.

**Step 702:** The first terminal apparatus establishes an association relationship among a PRB index, a PRB interlace index, and a resource subset index in the first frequency domain resource set.

In this embodiment of this application, the first terminal apparatus may establish the association relationship among the PRB index, the PRB interlace index, and the resource subset index in the first frequency domain resource set.

In another possible implementation, the first terminal apparatus may alternatively introduce a new index, which may be referred to as a virtual PRB index. The first terminal apparatus may establish an association relationship among a PRB index, a PRB interlace index, and a virtual PRB index in the first frequency domain resource set, and establish an association relationship between a virtual PRB index and a resource subset index.

Refer to (c) in FIG. 6. $M_{\mathrm{PRB,\,set}}^{\mathrm{PSFCH}}$ PRBs in the first frequency domain resource set may be first sorted in ascending order of indexes of interlaces, and then frequency domain resource units in each interlace are sorted in ascending order of indexes of frequency domain resource units. These PRBs are sequentially numbered based on the sorting, to obtain virtual PRB indexes.

The PRBs in the first frequency domain resource set are sequentially divided into a plurality of resource subsets based on the virtual PRB indexes. In this embodiment of this application, $M_{\mathrm{RBG}}^{\mathrm{PSFCH}}$ indicates a quantity of resource subsets, and details are not described again in other parts. In (c) in FIG. 6, a quantity of virtual PRBs is 20, and a quantity of PRBs included in each resource subset is 2. Therefore, it may be calculated that a quantity $M_{\mathrm{RBG}}^{\mathrm{PSFCH}}$ is a quotient of $M_{\mathrm{PRB,\,set}}^{\mathrm{PSFCH}}$ and $K_3$, where $M_{\mathrm{RBG}}^{\mathrm{PSFCH}} = M_{\mathrm{PRB,\,set}}^{\mathrm{PSFCH}}/K_3$, that is, 10. $M_{\mathrm{PRB,\,set}}^{\mathrm{PSFCH}}$ may be a value determined in the implementation A1 or the implementation A2, and correspondingly, $M_{\mathrm{RBG}}^{\mathrm{PSFCH}}$ also corresponds to two values respectively corresponding to the implementation A1 and the implementation A2. In this embodiment of this application, an example in which $K_3$ indicates a quantity of PRBs included in one resource subset is used for description. $K_3$ is an integer greater than or equal to 1. Other similarities are not described. In this embodiment of this application, $K_3$ may be a value preconfigured or configured by a network.

In another possible implementation provided in this embodiment of this application, in the implementation, a common feedback resource is further set in the resource set #0. The common feedback resource may include one or more frequency domain resource units. The first terminal apparatus sends first sidelink feedback information in the first resource subset, and may also send second sidelink feedback information in the common feedback resource.

In a possible implementation, the first sidelink information belongs to a first COT. The first terminal apparatus sends the second sidelink feedback information on a common feedback resource included in all the RB sets (set) in the first COT; or the first sidelink information occupies a plurality of RB sets included in the first COT, and the first terminal apparatus sends the second sidelink feedback information on a common feedback resource included in the plurality of RB sets.

The first sidelink feedback information and the second sidelink feedback information may be the same or different, and transmit powers of the first sidelink feedback information and the second sidelink feedback information may be the same or different. In addition to sending sidelink feedback information in a resource subset corresponding to another terminal apparatus, the another terminal apparatus may alternatively send the feedback information on the common feedback resource. Refer to (b) and (c) in FIG. 6. If the interlace 4 is a common interlace, it is assumed that the first terminal apparatus needs to send the first sidelink feedback information on a PRB associated with the resource subset #0, and also needs to send the second sidelink feedback information on a PRB (for example, a PRB #4) of one or more frequency domain resource units in the interlace 4.

In a possible implementation, the common feedback resource may be an interlace, and the interlace may be referred to as a common interlace (common interlace). Frequency domain resource units in the plurality of resource subsets belong to an interlace other than the common interlace in a plurality of interlaces. It may also be understood as that the resource subset defined in this embodiment of this application belongs to a resource that corresponds to the terminal apparatus and that needs to transmit feedback information. Therefore, a frequency domain resource unit in the common interlace cannot be classified into the resource subset, or it is understood as that a frequency domain resource unit in the common interlace cannot be allocated to a terminal apparatus for dedicated use.

In a possible implementation, first configuration information includes a bitmap, some bits in the bitmap are associated with the common feedback resource, and values of these bits may be set to 0 (or 1). Refer to (a) in FIG. 6. If the interlace 4 is a common interlace, it can be learned that a bit corresponding to a PRB in the common interlace in the bitmap #1 is 0. In actual application, the bit corresponding to the PRB in the common interlace may alternatively be 1. Because a bit 1 or 0 in the bitmap of the first configuration information further indicates whether a frequency domain resource unit associated with the bit is used for PSFCH transmission, to distinguish from this meaning, the first configuration information further includes information indicating a bit for a common interlace. For example, the first configuration information further includes information, and the information indicates specific bits associated with frequency domain resource units being a common feedback resource.

In another possible implementation, the first configuration information includes a bitmap, and a bit corresponding to a frequency domain resource unit in an interlace adjacent to the common feedback resource is 0 in the bitmap. Refer to (a) in FIG. 6. If the interlace 4 is a common interlace, bits corresponding to frequency domain resources in the interlace 3 and the interlace 0 (which is an interlace adjacent to the interlace 4) may be set to 0. In this way, interference caused by a signal on the common feedback resource to a valid feedback signal can be reduced.

**Step 703:** The first terminal apparatus determines a quantity of resource subsets corresponding to a sub-channel.

A PSFCH resource is a periodic resource configured in the resource pool. In this embodiment of this application, a periodicity configuration parameter is represented as $\mathrm{N}_{\mathrm{PSSCH}}^{\mathrm{PSFCH}}$, and details are not described again in other parts. $\mathrm{N}_{\mathrm{PSSCH}}^{\mathrm{PSFCH}}$ may be 0, 1, 2, or 4. $N_{\mathrm{PSSCH}}^{\mathrm{PSFCH}} = 0$ indicates that no PSFCH resource is configured in the resource pool, and PSFCH sending is not enabled in the resource, that is, a physical layer HARQ feedback and a conflict indication are not supported. For example, $\mathrm{N}_{\mathrm{PSSCH}}^{\mathrm{PSFCH}} = 1,2,4$ indicates that there is one PSFCH slot in every $\mathrm{N}_{\mathrm{PSSCH}}^{\mathrm{PSFCH}}$ SL slots in the resource pool. FIG. 8 shows a possible example of a resource configuration. In FIG. 8, an example in which the periodicity configuration parameter $\mathrm{N}_{\mathrm{PSSCH}}^{\mathrm{PSFCH}}$ is 1, 2, or 4 is used. As shown in **FIG. 8,** in a slot in which a frequency domain resource of a PSFCH is located, the PSFCH occupies last two symbols before a gap (gap).

In this embodiment of this application, a unit of a scheduling granularity of a PSCCH, a PSSCH, or the PSFCH in time domain is one time unit. One time unit may be one slot (slot) or one mini-slot (mini-slot). This is not specifically limited. In this embodiment of this application, an example in which one time unit is one slot is used for description. The SL slot (the SL slot may also be referred to as a PSSCH slot) may be a slot used to transmit the PSSCH, and the PSFCH slot is a slot in which the PSFCH resource exists. Feedback information corresponding to one PSSCH slot is transmitted in a PSFCH slot corresponding to the PSSCH slot.

In a possible implementation, the first terminal apparatus determines, based on a quantity of resource subsets, a first quantity, and a quantity of PSSCH slots associated with one PSFCH slot, a quantity of resource subsets corresponding to a sub-channel in a PSSCH slot. The first quantity is a quantity of sub-channels included in the resource pool or the RB set. In this way, resource subsets may be allocated to time-frequency resources corresponding to PSSCH transmission as evenly as possible. In addition, this allocation manner is proper and is more compatible with a conventional technology.

In a possible implementation, the quantity $M_{\mathrm{RBG}}^{\mathrm{PSFCH}}$ of resource subsets may be a multiple of a product of the quantity of PSSCH slots associated with the PSFCH slot and the first quantity. In this way, all frequency domain resource units may be evenly allocated to sub-channels, so that a case in which some frequency domain resource units cannot be allocated to resource subsets can be avoided, to reduce a waste of resources.

In a possible example, a quantity of resource subsets corresponding to one (or each) sub-channel in a PSSCH slot may be represented by using a formula: $M_{\mathrm{subch,\,slot}}^{\mathrm{PSFCH}} = M_{\mathrm{RBG}}^{\mathrm{PSFCH}} / \left(N_{\mathrm{subch}} \cdot N_{\mathrm{PSSCH}}^{\mathrm{PSFCH}}\right)$. $M_{\mathrm{RBG}}^{\mathrm{PSFCH}}$ indicates the quantity of resource subsets (which may also be referred to as a quantity of resource subsets in a PSFCH frequency domain resource (the first frequency domain resource set)). The quantity of PSSCH slots associated with the PSFCH slot may be used to replace $\mathrm{N}_{\mathrm{PSSCH}}^{\mathrm{PSFCH}}$ in the formula. The quantity of PSSCH slots associated with the PSFCH slot may be less than or equal to the periodicity configuration parameter $\mathrm{N}_{\mathrm{PSSCH}}^{\mathrm{PSFCH}}$. $\mathrm{N}_{\mathrm{subch}}$ indicates the first quantity. Because the implementation A1 and the implementation A2 respectively correspond to two $M_{\mathrm{PRB,\,set}}^{\mathrm{PSFCH}}$, and then respectively correspond to two $M_{\mathrm{RBG}}^{\mathrm{PSFCH}}$, two values of $N_{subch}$ are also respectively taken.

In a possible implementation, when $M_{\mathrm{PRB,\ set}}^{\mathrm{PSFCH}}$ is obtained through calculation in the implementation A1, $N_{subch}$ may be a quantity of sub-channels included in the RB set. In the implementation, in a PSSCH slot associated with one PSFCH slot, a sub-channel for transmitting a PSSCH/PSCCH and a feedback resource of the sub-channel belong to a same resource block set, that is, transmission of feedback information belongs to the resource block set occupied by the PSSCH/PSCCH. In this way, an unlicensed band COT sharing rule can be effectively used, and a PSFCH feedback success probability can be improved.

In another possible implementation, when $M_{\mathrm{PRB,\ set}}^{\mathrm{PSFCH}}$ is obtained through calculation in the implementation A2, $N_{subch}$ may be a quantity of sub-channels included in the resource pool (possibly the plurality of RB sets). In the implementation, the first terminal apparatus may allocate, based on the first quantity, resource subsets to all the sub-channels included in the resource pool, that is, allocate resource subsets to the sub-channels based on a granularity of the resource pool. In the solution, the corresponding resource subsets may be allocated to the sub-channels in the entire resource pool by using one processing process, so that a quantity of times of performing a processing process by the first terminal apparatus can be reduced.

**Step 704:** The first terminal apparatus determines, in a PSSCH slot associated with one PSFCH slot, at least one resource subset based on a PSSCH slot index, a sub-channel index, the quantity of PSSCH slots associated with the PSFCH slot, and a quantity of resource subsets corresponding to one PSSCH slot and one sub-channel.

In step 704, the first terminal apparatus may determine the at least one resource subset based on indexes of a sub-channel and a slot that are occupied by the first sidelink information, the quantity of PSSCH slots associated with the PSFCH slot, and the quantity of resource subsets corresponding to the PSSCH slot (which is a PSSCH slot in the PSSCH slots associated with the PSFCH slot) and the sub-channel, for example, determine an index of the at least one resource subset. The at least one resource subset includes one or more resource subsets, and the at least one resource subset includes the first resource subset. The at least one resource subset may also be understood as a resource subset associated with the sub-channel and the slot that are occupied by the first sidelink information. In the solution, a frequency domain resource granularity determined by the first terminal apparatus is the resource subset rather than the frequency domain resource unit. Based on sub-channel and slot allocation, the resource subsets can be allocated more properly and a waste of resources can be reduced. In addition, determining the at least one corresponding resource subset based on the indexes of the sub-channel and the slot is better compatible with the conventional technology.

Considering a limitation of a decoding capability of a receive-end terminal apparatus, the receive-end terminal apparatus cannot immediately perform feedback after receiving a PSSCH. Therefore, a time interval K for a PSSCH feedback is defined in a standard. To be specific, the PSSCH transmits a PSFCH in a 1st available slot including a PSFCH frequency domain resource. There are at least K slots between the slot and a slot in which the PSSCH is located. A value of K is (pre)configured in the resource pool, and K is a positive integer. As shown in FIG. 9, when K = 2, a PSSCH carried in slots 0 and 1 may be fed back on a PSFCH frequency domain resource in a slot 3, and feedback information corresponding to the PSSCH carried in slots 2 to 5 is fed back on a PSFCH frequency domain resource in a slot 7. In addition, because feedback for the slots 2 to 5 is performed on the PSFCH frequency domain resource in the same slot, the slots may be referred to as four PSSCH slots related to the PSFCH slot, or a PSSCH bundling window length.

Time-frequency resources in $\mathrm{N}_{\mathrm{PSSCH}}^{\mathrm{PSFCH}}$ PSSCH slots are sorted in a manner of time domain first and then frequency domain, and a PSFCH frequency domain resource in one PSFCH slot is sequentially allocated to each sub-channel in a feedback periodicity.

Specifically, as shown in FIG. 10, the time-frequency resources in the $\mathrm{N}_{\mathrm{PSSCH}}^{\mathrm{PSFCH}}$ PSSCH slots are numbered in a manner of time domain first and then frequency domain. When $\mathrm{N}_{\mathrm{PSSCH}}^{\mathrm{PSFCH}} = 4$, a PSFCH frequency domain resource corresponding to each sub-channel in the four bundled PSSCH slots is shown by using numbers in the figure. Each time-frequency resource corresponds to one slot index and one frequency domain index. For example, for a time-frequency resource numbered 0 in FIG. 10, a time domain index i of the time-frequency resource is 0, and a sub-channel index j is 0. For another example, for a time-frequency resource numbered 5 in FIG. 10, a time domain index i of the time-frequency resource is 1, and a sub-channel index j is 1. In this embodiment of this application, i and j respectively represent a time domain index and a sub-channel index.

The quantity $M_{\mathrm{subch,\ slot}}^{\mathrm{PSFCH}} = M_{\mathrm{RBG}}^{\mathrm{PSFCH}} / \left(N_{\mathrm{subch}} \cdot N_{\mathrm{PSSCH}}^{\mathrm{PSFCH}}\right)$ of resource subsets that are used for PSFCH transmission and that correspond to each sub-channel has been calculated by using the foregoing steps and then $M_{\mathrm{subch,\ slot}}^{\mathrm{PSFCH}} = M_{\mathrm{RBG}}^{\mathrm{PSFCH}} / \left(N_{\mathrm{subch}} \cdot N_{\mathrm{PSSCH}}^{\mathrm{PSFCH}}\right)$ resource subsets used for PSFCH transmission may be allocated to each time-frequency resource. As shown in FIG. 10, there are a total of 12 time-frequency resources. If there are a total of 24 resource subsets used for PSFCH transmission, two resource subsets used for PSFCH transmission should be allocated to each time-frequency resource. In a possible implementation, the resource subsets used for PSFCH transmission may be sequentially allocated to each time-frequency resource in a manner of time domain first and then frequency domain. For example, a resource subset #0 used for PSFCH transmission and a resource subset #1 used for PSFCH transmission are allocated to the time-frequency resource numbered 0 in FIG. 10. For another example, a resource subset #10 used for PSFCH transmission and a resource subset #11 used for PSFCH transmission are allocated to the time-frequency resource numbered 5 in FIG. 10.

In at least one PSSCH slot associated with one PSFCH slot, for an $i^{th}$ slot in the at least one PSSCH slot and a sub-channel j, a range of a corresponding resource subset includes:

$$\left[\left(\mathrm{i} + \mathrm{j} \cdot \mathrm{N}_{\mathrm{PSSCH}}^{\mathrm{PSFCH}}\right) \cdot \mathrm{M}_{\mathrm{subch,\ slot}}^{\mathrm{PSFCH}}, \left(\mathrm{i} + 1 + \mathrm{j} \cdot \mathrm{N}_{\mathrm{PSSCH}}^{\mathrm{PSFCH}}\right) \cdot \mathrm{M}_{\mathrm{subch,\ slot}}^{\mathrm{PSFCH}} - 1\right]$$

$\mathrm{N}_{\mathrm{PSSCH}}^{\mathrm{PSFCH}}$, $0 \le 1 \le N_{subch}$, and a value of $N_{subch}$ is the first quantity. For other related parameters, refer to corresponding descriptions of other positions in this specification. Details are not described again.

In another possible implementation, if the terminal apparatus occupies two sub-channels to transmit a PSSCH, for example, the terminal apparatus occupies two time-frequency resources numbered 5 and 9 in the figure, time domain indexes i of the two time-frequency resources are both 1, and sub-channel indexes are respectively 1 and 2. In this case, transmission of the PSSCH corresponds to ranges of resource subsets that are used for PSFCH transmission and that correspond to the time-frequency resources numbered 5 and 9. For example, the time-frequency resource numbered 5 corresponds to the resource subset #10 and the resource subset #11, and the time-frequency resource numbered 9 corresponds to a resource subset #18 and a resource subset #19. The ranges of the two resource subsets are non-contiguous in frequency domain. For example, the resource subset #11 and the resource subset #18 are non-contiguous in frequency domain.

**Step 705:** The first terminal apparatus determines a quantity of PSFCH resources corresponding to transmission of a PSSCH/PSCCH.

In step 705, the PSFCH resource determined by the first terminal apparatus includes a frequency domain resource and a code domain resource, and the quantity is represented by $R_{\mathrm{PRB},\,CS}^{\mathrm{PSFCH}}$. Details are not described again at other positions.

If one PSSCH occupies $\mathrm{N}_{\mathrm{subch}}^{\mathrm{PSSCH}}$ sub-channels, the PSSCH corresponds to $\mathrm{N}_{\mathrm{subch}}^{\mathrm{PSSCH}} \cdot \mathrm{M}_{\mathrm{subch,\ slot}}^{\mathrm{PSFCH}} \cdot \mathrm{N}_{\mathrm{CS}}^{\mathrm{PSFCH}}$ PSFCH frequency domain resource pairs. $\mathrm{N}_{\mathrm{CS}}^{\mathrm{PSFCH}}$ indicates a quantity of PSFCH sequence pairs that may be multiplexed in the resource pool and $\mathrm{M}_{\mathrm{subch,\ slot}}^{\mathrm{PSFCH}}$ indicates a quantity of resource subsets in a PSFCH frequency domain resource allocated to each sub-channel. A PSFCH frequency domain resource that may be used by a receive-end user of the PSSCH may be further limited by configuring $\mathrm{N}_{\mathrm{type}}^{\mathrm{PSFCH}}$.

For differentiation, a first resource set is defined in this embodiment of this application. A resource in the first resource set includes a frequency domain resource and a code domain resource. A quantity of sidelink feedback channel resources in the first resource set may be replaced with $R_{\mathrm{PRB},\,CS}^{\mathrm{PSFCH}}$. In actual application, each parameter provided in this embodiment of this application may alternatively be written in another form. The first resource set may include, in frequency domain, a resource subset associated with at least one sub-channel (or all sub-channels) occupied by transmission of the PSSCH. The quantity of sidelink feedback channel resources in this embodiment of this application may also include a PSFCH resource.

The following separately describes an implementation B1, an implementation B2, and an implementation B3.

**Implementation B1**

Transmission of a PSSCH (transmission of the first sidelink information) occupies an RB set. If the resource pool is configured with $\mathrm{N}_{\mathrm{type}}^{\mathrm{PSFCH}} = 1$, a receive-end user of the PSSCH can use only a PSFCH frequency domain resource corresponding to a $1^{st}$ sub-channel occupied by PSSCH transmission. In this embodiment of this application, second configuration information may include $\mathrm{N}_{type}^{PSFCH}$. The first terminal apparatus may determine, based on the second configuration information, specific parameters used to calculate the quantity of sidelink feedback channel resources in the first resource set.

In the implementation B1, in a possible implementation, the first terminal apparatus determines the quantity of sidelink feedback channel resources in the first resource set based on the second configuration information, a quantity of cyclic shift pairs, and the quantity of resource subsets corresponding to the sub-channel in the slot in the PSSCH slots (which may also be understood as a quantity of resource subsets corresponding to one sub-channel occupied by the first sidelink information). In this way, the quantity of sidelink feedback channel resources in the first resource set may be determined in two dimensions: a code domain and a frequency domain, to provide more selectable resources for the first terminal apparatus. In addition, in the solution, a granularity of the first resource set in frequency domain is a resource subset, and a granularity of the first resource set in code domain is a quantity of cyclic shift pairs. The solution is more compatible with the conventional technology.

In a possible example, $R_{PRB,\ CS}^{PSFCH} = M_{subch,\ slot}^{PSFCH} \cdot N_{CS}^{PSFCH}$. $M_{subch,\ slot}^{PSFCH}$ may be considered as the quantity of resource subsets corresponding to the sub-channel occupied by the first sidelink information, and $N_{CS}^{PSFCH}$ may be considered as the quantity of cyclic shift pairs. The parameter may be preconfigured or configured by a network.

In another possible implementation, the first terminal apparatus determines the quantity $R_{PRB,\ CS}^{PSFCH}$ of sidelink feedback channel resources in the first resource set based on the second configuration information, a second quantity, a quantity of cyclic shift pairs, and the quantity of resource subsets corresponding to the sub-channel in the slot in the PSSCH slots (which may also be understood as a quantity of resource subsets corresponding to one sub-channel occupied by the first sidelink information), where $R_{PRB,\ CS}^{PSFCH} = N_{subch}^{PSSCH} \cdot M_{subch,\ slot}^{PSFCH} \cdot N_{CS}^{PSFCH}$. $N_{subch}^{PSSCH}$ indicates the second quantity, and the second quantity is determined based on the second configuration information. When the second configuration information $N_{type}^{PSFCH}$ is 1, a value of the second quantity is 1. As shown in FIG. 10, when a PSSCH occupies two time-frequency resources numbered 5 and 9 to transmit data, a receive-end user of the PSSCH can use only a resource subset that is associated with the time-frequency resource numbered 5 and that is used for PSFCH transmission, to perform feedback.

The second configuration information may indicate a quantity of frequency domain resource units that may be multiplexed for the first sidelink feedback information. Therefore, the first terminal apparatus may determine, based on different configurations of the second configuration information, the quantity of sidelink feedback channel resources in the first resource set (that is, a quantity of sidelink feedback channel resources corresponding to the first sidelink information). For example, the second configuration information indicates that a feedback resource corresponding to the first sidelink information is a PSFCH feedback resource corresponding to a plurality of sub-channels occupied by the first sidelink feedback information. In this way, when a plurality of terminal apparatuses all need to perform feedback for the first sidelink information, feedback resources of the plurality of terminal apparatuses do not conflict with each other. In this way, a quantity of multicast members of a multicast type 2 that can be supported by the resource pool is also affected. In addition, this is also more compatible with the conventional technology.

**Implementation B2**

Transmission of a PSSCH (transmission of the first sidelink information) occupies an RB set. If the resource pool is configured with $N_{type}^{PSFCH} = N_{subch}^{PSSCH}$, a receive-end user of the PSSCH may perform feedback by using PSFCH frequency domain resources corresponding to all sub-channels occupied by the PSSCH.

In the implementation B2, in a possible implementation, the first terminal apparatus determines the quantity $R_{PRB,\ CS}^{PSFCH}$ of sidelink feedback channel resources in the first resource set based on the second configuration information, a second quantity, a quantity of cyclic shift pairs, and the quantity of resource subsets corresponding to the sub-channel in the slot in the PSSCH slots (which may also be understood as a quantity of resource subsets corresponding to one sub-channel occupied by the first sidelink information).

In a possible example, $R_{PRB,\ CS}^{PSFCH} = N_{subch}^{PSSCH} \cdot M_{subch,\ slot}^{PSFCH} \cdot N_{CS}^{PSFCH}$. $N_{subch}^{PSSCH}$ indicates the second quantity, and the second quantity is determined based on a quantity of sub-channels occupied by the second configuration information and/or the first sidelink information. When the second configuration information $N_{type}^{PSFCH} = N_{subch}^{PSSCH}$ a value of the second quantity is a quantity of sub-channels occupied by the first sidelink information in an RB set. Other parameters are similar to content in the implementation B1, and details are not described again.

**Implementation B3**

Transmission of a PSSCH (transmission of the first sidelink information) occupies a plurality of RB sets of the resource pool. If the resource pool is configured with $N_{type}^{PSFCH} = N_{subch}^{PSSCH}$, a receive-end user of the PSSCH may perform feedback by using PSFCH frequency domain resources corresponding to all sub-channels of the PSSCH.

In the implementation B3, in a possible implementation, the first terminal apparatus determines a quantity $R_{PRB,\,CS}^{PSFCH}$ of sidelink feedback channel resources in a first resource set based on second configuration information, a second quantity, a quantity of cyclic shift pairs, and a quantity of first resource subsets, where the first resource set includes at least one resource subset in frequency domain. In the implementation B3, the second quantity includes a total quantity of sub-channels occupied by the first sidelink information in the plurality of resource block sets. The quantity of first resource subsets includes a total quantity of resource subsets corresponding to the sub-channels occupied by the first sidelink information in the plurality of resource block sets, and the quantity of first resource subsets is determined based on the quantity of resource subsets corresponding to the sub-channel in the slot in the PSSCH slots.

In actual application, the first sidelink information may cross a plurality of resource block sets. In this case, in the solution provided in this embodiment of this application, a sufficient quantity of sidelink feedback channel resources may be allocated to the first terminal apparatus more properly.

In a possible example, $R_{PRB,\,CS}^{PSFCH} = \sum_{n=1}^{N_{RB\,set}} N_{subch,n}^{PSSCH} \cdot M_{subch,\,slot,n}^{PSFCH} \cdot N_{CS}^{PSFCH}$. In the implementation B3, $\sum_{n=1}^{N_{RB\,set}} N_{subch,n}^{PSSCH}$ indicates the second quantity, where the second quantity is the total quantity of sub-channels occupied by the first sidelink information in the plurality of resource block sets. $N_{subch,n}^{PSSCH}$ indicates a quantity of sub-channels occupied by the first sidelink information in a corresponding n$^{th}$ RB set, n is a positive integer, a value of n ranges from 1 to $N_{RB\,set}$. $N_{RB\,set}$ indicates a quantity of RB sets occupied by transmission of the PSSCH. When the second configuration information $N_{type}^{PSFCH} = N_{subch}^{PSSCH}$, a value of the second quantity is the total quantity of sub-channels occupied by the first sidelink information in the plurality of RB sets. $M_{subch,\,slot,n}^{PSFCH}$ indicates a quantity of resource subsets corresponding to one sub-channel occupied by transmission of the PSSCH in an n$^{th}$ RB set. For example, $M_{subch,\,slot,n}^{PSFCH}$ may be correspondingly calculated in the manner described in step 703.

For example, when a value of n is 1, $M_{subch,\,slot,n}^{PSFCH}$ indicates a quantity of resource subsets corresponding to one sub-channel in a 1$^{st}$ RB set occupied by transmission of the PSSCH. For a manner of obtaining the quantity of resource subsets corresponding to the sub-channel in the 1$^{st}$ RB set, refer to the manner of obtaining $M_{subch,\,slot}^{PSFCH}$ described in step 703. The first quantity may include a quantity of sub-channels included in the 1$^{st}$ RB set.

For another example, when a value of n is 2, $M_{subch,\,slot,n}^{PSFCH}$ indicates a quantity of resource subsets corresponding to one sub-channel in a 2$^{nd}$ RB set occupied by transmission of the PSSCH. For a manner of obtaining the quantity of resource subsets corresponding to the sub-channel in the 2$^{nd}$ RB set, refer to the manner of obtaining $M_{subch,\,slot}^{PSFCH}$ described in step 703. The first quantity may include a quantity of sub-channels included in the 2$^{nd}$ RB set.

Other parameters are similar to the definitions in the foregoing content, and details are not described again.

**Step 706:** The first terminal apparatus determines a resource index of a sidelink feedback channel resource corresponding to the first sidelink information.

The sidelink feedback channel resource corresponding to the first sidelink information is a resource in the first resource set.

The first resource set includes the frequency domain resource and the code domain resource. Resources in the first resource set may be sorted. For example, frequency domain resource units in the first resource set are arranged based on indexes of resource subsets. Code domain resources in the first resource set are arranged based on indexes of cyclic shift pairs. Refer to the sorting in FIG. 10. Sorting is first performed based on indexes of resource subsets in frequency domain, for example, in ascending order, and then sorting is performed in ascending or descending order based on indexes of cyclic shift pairs in code domain.

In step 706, the first terminal apparatus determines, from the first resource set based on a first identifier, a second identifier, and the quantity of sidelink feedback channel resources in the first resource set, an index of a sidelink feedback channel resource corresponding to the first sidelink information. The first identifier includes a physical layer source identifier (physical layer source identity) of the first sidelink information. The first identifier may be provided by second-order SCI in the first sidelink information, for example, an SCI format 2-A/2-B/2-C. The second identifier includes an identifier of the first terminal apparatus and/or a predefined value.

A transmit-end user selects a resource corresponding to a $((P_{ID} + M_{ID}) \mathrm{mod} R_{PRB,\ CS}^{PSFCH})^{th}$ PSFCH frequency domain resource to feed back a PSFCH, where $P_{ID}$ indicates a physical layer source address identifier (for example, the first identifier) carried in control information. For multicast 2, $M_{ID}$ is an identifier (for example, the second identifier) configured for current PSSCH information transfer by a higher layer of each receive-end user. Otherwise, $M_{ID}$ = 0. On $R_{PRB,\ CS}^{PSFCH}$ PSFCH frequency domain resource pairs, all PSFCH sequences are arranged in ascending order of first frequency domain indexes and then code domain indexes, that is, an index of a resource subset corresponding to a PSFCH feedback is $\left((P_{ID} + M_{ID}) \mathrm{mod} R_{PRB,\ CS}^{PSFCH}\right) \mathrm{mod}\left(R_{PRB,\ CS}^{PSFCH}/(N_{CS}^{PSFCH} * N_{type}^{PSFCH})\right)$, a cyclic shift pair index (Cyclic Shift Pair Index) $= \left\lfloor\left((P_{ID} + M_{ID}) \mathrm{mod} R_{PRB,\ CS}^{PSFCH}\right) / \left(R_{PRB,\ CS}^{PSFCH}/(N_{CS}^{PSFCH} * N_{type}^{PSFCH})\right)\right\rfloor$ corresponding to the PSFCH feedback in the resource subset, and it is determined, according to Table 1, to generate $m_0$ of a PSFCH feedback sequence.

Table 1 is merely an example, and a value of $m_0$ may alternatively be determined based on another factor. This is not limited in this application.

Table 1

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

Due to different $M_{ID}$, for multicast 2, each user in a group uses a different PSFCH frequency domain resource pair to perform feedback, and correspondingly, the transmit-end user also perform receiving on each resource pair (a prerequisite is that $M_{ID}$ of each user in the group is known to members in the group). For multicast 1, because $M_{ID}$ = 0, for a PSSCH whose source address $P_{ID}$ is determined, each member in the group uses a same PSFCH to feed back NACK information.

In a multicast 2 scenario, if the user in the group can correctly decode a PSCCH corresponding to a PSSCH, the user in the group may perform feedback based on HARQ enabling indication information of control information. For example, if the user in the group fails to decode the PSSCH, the user feeds back a PSFCH sequence carrying NACK information. If the user in the group successfully decodes the PSSCH, the user feeds back a PSFCH sequence carrying ACK information.

**Step 707:** The first terminal apparatus determines, based on a correspondence between a resource subset index and a frequency domain resource unit index, a frequency domain resource unit index corresponding to a resource subset index of the sidelink feedback channel resource corresponding to the first sidelink information.

Because the first terminal apparatus determines the association relationship between the resource subset index and the frequency domain resource unit index (for example, the PRB index), after determining the resource subset index based on the foregoing step, the first terminal apparatus may further determine the frequency domain resource unit index, and then the first terminal apparatus may send the first sidelink feedback information on a frequency domain resource unit corresponding to the resource subset index.

It can be learned from the foregoing content that in the solution provided in this embodiment of this application, the first terminal apparatus may determine a resource subset, in frequency domain, corresponding to the sidelink feedback channel resource corresponding to the first sidelink information, and then send the feedback information on a plurality of PRBs included in the resource subset. Therefore, a total power for sending the feedback information can be increased, and quality of PSFCH transmission can be improved.

In addition, at least 80% of a normal bandwidth needs to be occupied when an unlicensed band is used due to a minimum occupied channel bandwidth (Occupied Channel Bandwidth, OCB) requirement. However, in the solution provided in this embodiment of this application, because the first terminal apparatus may send the sidelink feedback information on the plurality of PRBs, a possibility of meeting the OCB requirement can be improved.

In another possible implementation, the first terminal apparatus may send the sidelink feedback information on a plurality of PRBs included in the interlace. Therefore, the first terminal apparatus may not need to send information in the common interlace to meet the OCB requirement, and then may not need to set the common interlace, to save resources.

In another possible implementation, the first terminal apparatus may send a PSFCH in the resource subset, or may send a signal in the common interlace. In this way, a possibility of meeting the OCB requirement can be further improved. FIG. 11 shows an example of possible PSFCH transmission. As shown in FIG. 11, it is assumed that $K_3$ = 2, SCS = 30 kHz, and one time of PSCCH/PSFCH transmission of the first terminal apparatus occupies an interlace in a slot. A PSFCH resource corresponding to the PSCCH/PSFCH transmission is a resource subset #0. In this case, the first terminal apparatus needs to send a dedicated (dedicate) PSFCH on two PRBs included in the resource subset #0, and further needs to send a signal in a common interlace.

It should be understood that, when the implementation A1 in step 701 is performed, the steps included in FIG. 7 should be performed on each RB set in the resource pool.

Based on the embodiments shown in FIG. 1, FIG. 2, FIG. 3A, FIG. 3B, FIG. 3C, FIG. 4, FIG. 5, FIG. 6, FIG. 7, FIG. 8, FIG. 9, FIG. 10, and FIG. 11 and the foregoing other content, FIG. 12 is a diagram of an example of a sidelink feedback information transmission method according to an embodiment of this application. For a first terminal apparatus and/or a second terminal apparatus in FIG. 12, refer to the related descriptions in FIG. 4. Details are not described again.

The solution provided in FIG. 12 is used by the first terminal apparatus or the second terminal apparatus to determine whether a sub-channel includes a sidelink feedback channel resource. Alternatively, the solution provided in FIG. 12 is used by the first terminal apparatus or the second terminal apparatus to determine a specific RB set to which a sidelink feedback channel resource of a sub-channel belongs. The implementation shown in FIG. 12 may be implemented separately, or may be used in combination with the implementation shown in FIG. 4 or FIG. 7.

For example, the implementation shown in FIG. 12 is used in combination with the implementation shown in FIG. 7, and the implementation provided in FIG. 12 may be performed before step 703 in FIG. 7. In the solution in FIG. 12, the first terminal apparatus or the second terminal apparatus may determine the specific RB set to which the sidelink feedback channel resource of the sub-channel belongs, and then may deduce specific sub-channels whose sidelink feedback channel resources are included in one RB set (this parameter may be understood as the foregoing parameter: the first quantity (for example, $N_{subch}$), and the parameter is a quantity of sub-channels included in one RB set).

The solution provided in FIG. 12 may be performed by the first terminal apparatus or the second terminal apparatus. Solutions performed by the first terminal apparatus and the second terminal apparatus are similar. The following uses an example in which the solution in FIG. 12 is performed by the first terminal apparatus for description. When the solution in FIG. 12 is performed by the second terminal apparatus, content is similar to that of the first terminal apparatus, and details are not described again.

As shown in FIG. 12, the method includes the following steps.

**Step 1201:** The first terminal apparatus determines a first sub-channel in a resource pool based on third configuration information.

The first sub-channel includes a frequency domain resource unit in a guard band, and the first sub-channel further includes a frequency domain resource unit in at least one resource block set.

The third configuration information is content such as an index range of an RB in the resource pool, a range of an RB set included in the resource pool, a range of the guard band, and a quantity of contiguous PRBs occupied by a sub-channel. The first terminal apparatus may deduce, based on the information, specific sub-channels belonging to a first type of sub-channels, and sub-channels in the first type of sub-channels have a feature of the first sub-channel, that is, include a PRB in the RB set, and further include a PRB in the guard band.

**Step 1202:** The first terminal apparatus determines a sidelink feedback channel resource corresponding to the first sub-channel, where the sidelink feedback channel resource is used to transmit sidelink feedback information.

For this type of channel: the first sub-channel, a status of the sidelink feedback channel resource of the first sub-channel is specified. Therefore, a unified standard can be used, and subsequent communication can be performed smoothly.

In addition, the solution provides a mapping relationship between a PSSCH and a PSFCH in a same RB set in a continuous resource allocation structure. In this way, an unlicensed band COT sharing rule can be effectively used, and a PSFCH feedback success probability can be improved.

The following includes an implementation C1, an implementation C2, and an implementation C3. In the implementation C1, the first sub-channel occupies a frequency domain resource unit in one resource block set, and does not occupy frequency domain resource units in a plurality of resource block sets. In the implementation C2, the first sub-channel occupies a plurality of resource block sets. In the implementation C3, the first sub-channel occupies a plurality of resource block sets.

**Implementation C1:** The first sub-channel occupies a frequency domain resource unit in one resource block set, and does not occupy frequency domain resource units in a plurality of resource block sets.

For example, in the implementation C1, all frequency domain resource units occupied by the first sub-channel except the frequency domain resource unit in the guard band belong to a first resource block set. It may also be considered that the at least one resource block set is the first resource block set. The following describes several possible examples by using an example C1.1 and an example C1.2.

**Example C1.1:** The first terminal apparatus may determine that the first resource block set includes the sidelink feedback channel resource corresponding to the first sub-channel.

For example, as shown in FIG. 13, a resource pool includes two RB sets, and a guard band between the two RB sets. The resource pool is divided into eight sub-channels, and a rest bandwidth or a rest PRB (rest PRB), where a part of RBs included in a sub-channel 3 and a sub-channel 4 are used as the guard band, and sub-channel allocation is performed according to the following rule: To be specific, starting from a start RB of the resource pool, PRB resources in the resource pool are sequentially allocated to sub-channels based on a sub-channel size, and finally, a PRB resource that is insufficient to form a sub-channel is referred to as a rest PRB. It should be understood that the sub-channel 3 and the sub-channel 4 each include a part of PRB resources that belong to the guard band, and bandwidths of a sub-channel 0 to a sub-channel 7 are the same.

The sub-channel 3 and the sub-channel 4 in FIG. 13 belong to the first sub-channel. In the example C1.1, the first terminal apparatus may determine that an RB set #0 includes a sidelink feedback channel resource corresponding to the sub-channel 3, and an RB set #1 includes a sidelink feedback channel resource corresponding to the sub-channel 4.

In this embodiment of this application, the first terminal apparatus may further determine that the RB set #0 includes sidelink feedback channel resources corresponding to the sub-channel 0, the sub-channel 1, and the sub-channel 2, and the RB set #1 includes sidelink feedback channel resources corresponding to the sub-channel 5, the sub-channel 6, and the sub-channel 7. It should be understood that, in the example in FIG. 13, in the implementation process corresponding to FIG. 7, in the implementation A1 of step 701, the first quantity is 4.

**Example** C1.2: The first terminal apparatus may determine that the first resource block set does not include the sidelink feedback channel resource corresponding to the first sub-channel. It may also be understood as that for this type of sub-channel (for example, the first sub-channel), the first terminal apparatus may not configure a sidelink feedback channel resource for the sub-channel from the first resource block set.

The sub-channel 3 and the sub-channel 4 in FIG. 13 belong to the first sub-channel. In the example C1.2, the first terminal apparatus may determine that the RB set #0 does not include the sidelink feedback channel resource corresponding to the sub-channel 3, and the RB set #1 does not include the sidelink feedback channel resource corresponding to the sub-channel 4. It should be understood that, in the example in FIG. 13, in the implementation process corresponding to FIG. 7, in the implementation A1 of step 701, the first quantity is 3.

**Implementation C2:** The first sub-channel occupies a plurality of resource block sets.

In the implementation C2, the at least one resource block set includes a plurality of resource block sets. For example, the plurality of resource block sets include the first resource block set and a second resource block set.

In the implementation C2, the first terminal apparatus may determine, based on at least one of a quantity of frequency domain resources occupied by the first sub-channel in the first resource block set, a quantity of frequency domain resources occupied by the first sub-channel in the second resource block set, a quantity of frequency domain resources occupied by the first sub-channel in the guard band, or an index of the first resource block set, the sidelink feedback channel resource corresponding to the first sub-channel. The following describes several possible examples by using an example C2.1, an example C2.2, an example C2.3, and an example C2.4.

**Example C2.1**

For example, the first terminal apparatus determines, based on an index of a resource block set in the plurality of resource block sets, that a resource block set with a lowest index (or a second lowest index, or an $n^{th}$ lowest index, where n is a positive integer) in the plurality of resource block sets includes the sidelink feedback channel resource corresponding to the first sub-channel. A plurality of resource block indexes are, for example, an RB set #0 and an RB set #1. Because 0 is less than 1, it may be considered that an index of the RB set #0 is lower than an index of the RB set #1, and the index of the RB set #1 is higher than the index of the RB set #0.

For example, as shown in FIG. 14, a resource pool includes two RB sets, and a guard band between the two RB sets. The resource pool is divided into five sub-channels, where a part of RBs included in a sub-channel 2 are used as the guard band, and further includes PRBs in $X_1$ RB sets #0, and also includes PRBs in $X_2$ RB sets #1. $X_1$ and $X_2$ are positive integers, and may be unequal or equal. The sub-channel 2 in FIG. 14 belongs to the first sub-channel, and the index of the RB set #0 is less than the index of the RB set #1. Therefore, the first terminal apparatus may determine that the RB set #0 includes a sidelink feedback channel resource corresponding to the sub-channel 2.

For another example, it is determined, based on an index of a resource block set in the plurality of resource block sets, that a resource block set with a highest index (or a second highest index, or an $n^{th}$ highest index, where n is a positive integer) in the plurality of resource block sets includes the sidelink feedback channel resource corresponding to the first sub-channel. With reference to the example in FIG. 14, the index of the RB set #1 is higher than the index of the RB set #0, and the first terminal apparatus may determine that the RB set #1 includes a sidelink feedback channel resource corresponding to the sub-channel 2.

**Example C2.2**

For example, when a quantity of frequency domain resource units in the first sub-channel that belong to the first resource block set is greater than a quantity of frequency domain resource units in the first sub-channel that belong to the second resource block set, it is determined that the first resource block set includes the sidelink feedback channel resource corresponding to the first sub-channel. For another example, when a quantity of frequency domain resource units in the first sub-channel that belong to the first resource block set is less than a quantity of frequency domain resource units in the first sub-channel that belong to the second resource block set, it is determined that the second resource block set includes the sidelink feedback channel resource corresponding to the first sub-channel. With reference to the example in FIG. 14, for example, $X_1$ is greater than $X_2$, and the first terminal apparatus may determine that the RB set #0 includes a sidelink feedback channel resource corresponding to the sub-channel 2.

**Example C2.3**

For example, when a quantity of frequency domain resource units included by the first sub-channel in the first resource block set is greater than a first value, it is determined that the first resource block set includes the sidelink feedback channel resource corresponding to the first sub-channel. In this embodiment of this application, the first value may be a configured value, or may be a quantity of resources occupied by a PSCCH corresponding to the first sub-channel. For another example, when a quantity of frequency domain resource units included by the first sub-channel in the second resource block set is greater than a first value, it is determined that the second resource block set includes the sidelink feedback channel resource corresponding to the first sub-channel. With reference to the example in FIG. 14, for example, $X_1$ is greater than the first value, and the first terminal apparatus may determine that the RB set #0 includes a sidelink feedback channel resource corresponding to the sub-channel 2.

Several solutions provided in the example C2.1, the example C2.2, and the example C2.3 may be performed in combination. For example, when the first terminal apparatus determines that the quantity of frequency domain resource units included by the first sub-channel in the first resource block set is greater than the first value and is greater than the quantity of frequency domain resource units included by the first sub-channel in the second resource block set, it is determined that the first resource block set includes the sidelink feedback channel resource corresponding to the first sub-channel.

For another example, if a quantity of frequency domain resource units in the first sub-channel that belong to the first resource block set is equal to a quantity of frequency domain resource units in the first sub-channel that belong to the second resource block set, the second terminal apparatus may determine that a resource block set (for example, the first resource block set) with a lowest index includes the sidelink feedback channel resource corresponding to the first sub-channel. With reference to the example in FIG. 14, for example, $X_1$ is equal to $X_2$, and the first terminal apparatus may determine, based on that the index of the RB set #0 is less than the index of the RB set #1, that the RB set #0 includes a sidelink feedback channel resource corresponding to the sub-channel 2.

**Example C2.4**

For example, for a ratio of a quantity of frequency domain resource units in the first sub-channel that belong to the first resource block set or a quantity of frequency domain resource units in the first sub-channel that belong to the second resource block set to a quantity of frequency domain resource units in the first sub-channel that belong to the guard band, it is determined that the first resource block set includes the sidelink feedback channel resource corresponding to the first sub-channel.

With reference to the example in FIG. 14, the quantity of frequency domain resource units in the first sub-channel that belong to the guard band is set to $X_3$.

For example, if a ratio of $X_1$ to $X_3$ is greater than a preset value or a (pre)configured value, the first terminal apparatus may determine that the RB set #0 includes a sidelink feedback channel resource corresponding to the sub-channel 2.

For another example, if a ratio of $X_2$ to $X_3$ is greater than a preset value or a (pre)configured value, the first terminal apparatus may determine that the RB set #1 includes a sidelink feedback channel resource corresponding to the sub-channel 2.

For another example, if a ratio of $X_2$ to $X_3$ is less than a preset value or a (pre)configured value, the first terminal apparatus may determine that the RB set #0 includes a sidelink feedback channel resource corresponding to the sub-channel 2.

For another example, if a ratio of $X_1$ to $X_3$ is less than a preset value or a (pre)configured value, the first terminal apparatus may determine that the RB set #1 includes a sidelink feedback channel resource corresponding to the sub-channel 2.

**Implementation C3:** The first sub-channel occupies a plurality of resource block sets.

In the implementation C3, the at least one resource block set includes a plurality of resource block sets. The first terminal apparatus may determine that each of the plurality of resource block sets includes the sidelink feedback channel resource corresponding to the first sub-channel.

For example, the plurality of resource block sets include a first resource block set and a second resource block set. The first terminal apparatus determines that the first resource block set includes the sidelink feedback channel resource corresponding to the first sub-channel, and determines that the second resource block set includes the sidelink feedback channel resource corresponding to the first sub-channel. With reference to the example in FIG. 14, the first terminal apparatus may determine that the RB set #1 and the RB set #0 each include the sidelink feedback channel resource corresponding to the sub-channel 2.

In the implementation, when the embodiments shown in FIG. 4 and FIG. 7 are performed for a frequency domain resource in the first resource block set, the first sub-channel belongs to a sub-channel included in the first resource block set. When the embodiments shown in FIG. 4 and FIG. 7 are performed for a frequency domain resource in the second resource block set, the first sub-channel also belongs to a sub-channel included in the second resource block set.

It should be understood that, in the example in FIG. 14, in the implementation process corresponding to FIG. 7, in the implementation corresponding to the implementation A1 of step 701, when the first terminal apparatus determines that the RB set #0 includes the sidelink feedback channel resource corresponding to the sub-channel 2, the first quantity is 3 when the resource set #0 is the RB set #0.

It should be understood that, in the example in FIG. 14, in the implementation process corresponding to FIG. 7, in the implementation corresponding to the implementation A1 of step 701, when the first terminal apparatus determines that the RB set #1 does not include the sidelink feedback channel resource corresponding to the sub-channel 2, the first quantity is 2 when the resource set #0 is the RB set #1.

It should be understood that, in the example in FIG. 14, in the implementation process corresponding to FIG. 7, in the implementation corresponding to the implementation A1 of step 701, when the first terminal apparatus determines that the RB set #1 includes the sidelink feedback channel resource corresponding to the sub-channel 2, the first quantity is 3 when the resource set #0 is the RB set #1.

It should be understood that, in the example in FIG. 14, in the implementation process corresponding to FIG. 7, in the implementation corresponding to the implementation A1 of step 701, when the first terminal apparatus determines that the RB set #0 does not include the sidelink feedback channel resource corresponding to the sub-channel 2, the first quantity is 2 when the resource set #0 is the RB set #0.

Based on the embodiments shown in FIG. 1, FIG. 2, FIG. 3A, FIG. 3B, FIG. 3C, FIG. 4, FIG. 5, FIG. 6, FIG. 7, FIG. 8, FIG. 9, FIG. 10, FIG. 11, FIG. 12, FIG. 13, and FIG. 14, and the foregoing other content, FIG. 15 is a diagram of an example of a sidelink feedback information transmission method according to an embodiment of this application. For a first terminal apparatus and/or a second terminal apparatus in FIG. 15, refer to the related descriptions in FIG. 4. Details are not described again.

In the solution provided in FIG. 15, to improve a success rate of feedback information transmission, the first terminal apparatus may include a plurality of feedback occasions, each feedback occasion corresponds to one resource set, and the resource set includes a time domain resource and a frequency domain resource. Two resource sets do not overlap in frequency domain and/or time domain. When PSFCH transmission performed by the first terminal apparatus on one feedback occasion fails, the first terminal apparatus may continue to perform PSFCH transmission on another feedback occasion.

The implementation shown in FIG. 15 may be implemented separately, or may be used in combination with the implementation shown in FIG. 4 (or FIG. 7).

For example, the implementation shown in FIG. 15 is used in combination with the implementation shown in FIG. 7, and the implementation provided in FIG. 15 may be performed before step 701 in FIG. 7. For a processing manner of a resource set in the embodiment shown in FIG. 15, refer to the processing manner of a resource in the resource set #0 in the embodiment shown in FIG. 7. A resource set may be considered as the resource set #0. For example, for a processing manner of each resource set in each feedback occasion, refer to the processing manner of the resource in the resource set #0.

The implementation shown in FIG. 15 may be alternatively used in combination with the implementations shown in FIG. 4 (or FIG. 7) and FIG. 12. After the resource set #0 is determined in the manner shown in FIG. 15, processing continues to be performed in the manners shown in FIG. 12 and FIG. 4. Related solutions are described above, and details are not described again.

As shown in FIG. 15, the method includes the following steps.

**Step 1501:** The second terminal apparatus sends first sidelink information.

Correspondingly, the first terminal apparatus receives the first sidelink information.

the first sidelink information corresponds to a plurality of resource sets, and two of the plurality of resource sets do not overlap in frequency domain and/or time domain.

In step 1501, in a possible implementation, the first terminal apparatus may divide a PSFCH frequency domain resource into a plurality of frequency domain resources, and one frequency domain resource corresponds to a frequency domain resource in a resource set.

**Step 1502:** The first terminal apparatus sends feedback information of the first sidelink information in at least one resource set.

Correspondingly, the second terminal apparatus receives the feedback information of the first sidelink information in the at least one resource set. The feedback information of the first sidelink information in this embodiment of this application may be the foregoing first sidelink feedback information, or may be other feedback information.

Each of the at least one resource set in this embodiment of this application may be considered as the resource set #0 in the embodiment of FIG. 7. A resource in a resource set may alternatively be divided into a plurality of resource subsets. For a related solution, refer to the foregoing content. Details are not described again.

In step 1502, the first terminal apparatus may send the feedback information of the first sidelink information in one of the plurality of resource sets. Alternatively, the first terminal apparatus may send the feedback information of the first sidelink information in a plurality of resource sets in the plurality of resource sets.

Because the first terminal apparatus may send the feedback information of the first sidelink information in at least one of the plurality of resource sets, a success rate of feedback information transmission between the first terminal apparatus and the second terminal apparatus can be improved.

In a possible implementation, in step 1502, the first terminal apparatus sends the feedback information of the first sidelink information in a second resource set in the plurality of resource sets. If sending fails, the first terminal apparatus sends the feedback information of the first sidelink information in a third resource set in the plurality of resource sets.

In a possible implementation, if the first terminal apparatus needs to send a PSFCH, the first terminal apparatus attempts LBT on a corresponding PSFCH feedback occasion, and if LBT succeeds, sends the PSFCH. If PSFCH transmission performed on the feedback occasion fails, a part or all of steps corresponding to a previous feedback occasion are repeatedly performed on a next feedback occasion, to determine a PRB that corresponds to the first terminal apparatus and used for PSFCH transmission on the feedback occasion, and attempt LBT on the PSFCH feedback occasion. If LBT succeeds, PSFCH transmission is performed until PSFCH transmission succeeds or there is no more feedback occasion.

**FIG. 16** is a possible diagram of an example of a plurality of feedback occasions of a terminal. As shown in FIG. 16, it is assumed that a PSFCH resource in a PSFCH slot is divided into a plurality of pieces, and one piece may be referred to as a PSFCH resource set (for example, a PSFCH resource set #1, a PSFCH resource set #2, a PSFCH resource set #3, and a PSFCH resource set #4 in FIG. 16). PRBs used for PSFCH transmission in the four resource sets in the figure may be indicated by four different bitmaps, or may be indicated by one bitmap. Any two of the four resource sets are mutually orthogonal in frequency domain, that is, do not overlap.

In a dashed box in FIG. 16, a 1$^{st}$ feedback occasion corresponding to PSCCH/PSSCH transmission is in a resource set #1 in a slot 3, a 2$^{nd}$ feedback occasion is in a resource set #2 in a slot 5, a 3$^{rd}$ feedback occasion is in a resource set #3 in a slot 7, and a 4$^{th}$ feedback occasion is in a resource set #4 in a slot 9.

It may be understood that, to implement functions in the foregoing embodiments, the first terminal apparatus and the second terminal apparatus include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

**FIG. 17 and FIG. 18** are diagrams of possible structures of communication apparatuses according to embodiments of this application. These communication apparatuses may be configured to implement a function of a first terminal apparatus or a second terminal apparatus in the foregoing method embodiments, and therefore can also implement beneficial effects of the foregoing method embodiments. In embodiments of this application, the communication apparatus may be the terminal apparatus shown in FIG. 3A, FIG. 3B, or FIG. 3C, or may be a module (for example, a chip) of the terminal apparatus shown in FIG. 3A, FIG. 3B, or FIG. 3C.

As shown in **FIG. 17,** a communication apparatus 1300 includes a processing unit 1310 and a transceiver unit 1320. The communication apparatus 1300 is configured to implement a function of the first terminal apparatus in the method embodiment shown in FIG. 4, FIG. 7, FIG. 12, or FIG. 15.

When the communication apparatus 1300 is configured to implement the function of the first terminal apparatus in the method embodiment shown in FIG. 4 or FIG. 7, the processing unit 1301 is configured to determine a first frequency domain resource set based on first configuration information, where frequency domain resource units in the first frequency domain resource set belong to a plurality of interlaces, the frequency domain resource units in the first frequency domain resource set belong to a plurality of resource subsets, the plurality of resource subsets include a first resource subset, and frequency domain resource units in the first resource subset belong to a same interlace; and send first sidelink feedback information in the first resource subset via the transceiver unit 1320.

In a possible implementation, when the communication apparatus 1300 is configured to implement the function of the first terminal apparatus in the method embodiment shown in FIG. 4 or FIG. 7, the processing unit 1301 is further configured to receive first sidelink information via the transceiver unit 1320, where the first sidelink feedback information is feedback information corresponding to the first sidelink information; and determine at least one resource subset based on indexes of a sub-channel and a slot that are occupied by the first sidelink information, where the at least one resource subset includes the first resource subset.

In a possible implementation, when the communication apparatus 1300 is configured to implement the function of the first terminal apparatus in the method embodiment shown in FIG. 4 or FIG. 7, the processing unit 1301 is further configured to determine, based on a quantity of resource subsets, a first quantity, and a quantity of PSSCH slots associated with one PSFCH slot, a quantity of resource subsets corresponding to a sub-channel in a slot in the PSSCH slots, where the first quantity is a quantity of sub-channels included in a resource block set.

In a possible implementation, when the communication apparatus 1300 is configured to implement the function of the first terminal apparatus in the method embodiment shown in FIG. 4 or FIG. 7, the processing unit 1301 is further configured to determine a quantity of sidelink feedback channel resources in a first resource set based on second configuration information, a quantity of cyclic shift pairs, and a quantity of resource subsets corresponding to one sub-channel occupied by the first sidelink information.

In a possible implementation, when the communication apparatus 1300 is configured to implement the function of the first terminal apparatus in the method embodiment shown in FIG. 4 or FIG. 7, the processing unit 1301 is further configured to determine the quantity of sidelink feedback channel resources in the first resource set further based on a second quantity, where the second quantity is determined based on the second configuration information and/or a quantity of sub-channels occupied by the first sidelink information.

In a possible implementation, when the communication apparatus 1300 is configured to implement the function of the first terminal apparatus in the method embodiment shown in FIG. 4 or FIG. 7, the processing unit 1301 is further configured to determine, based on a quantity of resource subsets, a first quantity, and a quantity of PSSCH slots associated with one PSFCH slot, a quantity of resource subsets corresponding to a sub-channel in a slot in the PSSCH slots, where the first quantity is a quantity of sub-channels included in a resource pool.

In a possible implementation, when the communication apparatus 1300 is configured to implement the function of the first terminal apparatus in the method embodiment shown in FIG. 4 or FIG. 7, the processing unit 1301 is further configured to determine a quantity of sidelink feedback channel resources in a first resource set based on second configuration information, a second quantity, a quantity of cyclic shift pairs, and a quantity of first resource subsets.

In a possible implementation, when the communication apparatus 1300 is configured to implement the function of the first terminal apparatus in the method embodiment shown in FIG. 4 or FIG. 7, the processing unit 1301 is further configured to determine, from the first resource set based on a first identifier, a second identifier, and the quantity of sidelink feedback channel resources in the first resource set, an index of a sidelink feedback channel resource corresponding to the first sidelink information.

In a possible implementation, when the communication apparatus 1300 is configured to implement the function of the first terminal apparatus in the method embodiment shown in FIG. 4 or FIG. 7, the processing unit 1301 is further configured to send second sidelink feedback information on a common feedback resource via the transceiver unit 1320.

In a possible implementation, when the communication apparatus 1300 is configured to implement the function of the first terminal apparatus in the method embodiment shown in FIG. 12, the processing unit 1301 is configured to determine, via the transceiver unit 1320, a first sub-channel in a resource pool based on third configuration information, where the first sub-channel includes a frequency domain resource unit in a guard band, and the first sub-channel further includes a frequency domain resource unit in at least one resource block set; and determine a sidelink feedback channel resource corresponding to the first sub-channel, where the sidelink feedback channel resource is used to transmit sidelink feedback information.

In a possible implementation, when the communication apparatus 1300 is configured to implement the function of the first terminal apparatus in the method embodiment shown in FIG. 12, the processing unit 1301 is specifically configured to: based on that the at least one resource block set is a first resource block set, determine that the first resource block set includes the sidelink feedback channel resource corresponding to the first sub-channel; or determine that the at least one resource block set does not include the sidelink feedback channel resource corresponding to the first sub-channel.

In a possible implementation, when the communication apparatus 1300 is configured to implement the function of the first terminal apparatus in the method embodiment shown in FIG. 12, the processing unit 1301 is specifically configured to determine, based on a quantity of frequency domain resources occupied by the first sub-channel in the first resource block set and/or an index of the first resource block set, the sidelink feedback channel resource corresponding to the first sub-channel.

In a possible implementation, when the communication apparatus 1300 is configured to implement the function of the first terminal apparatus in the method embodiment shown in FIG. 12, the processing unit 1301 is specifically configured to determine, based on an index of a resource block set in a plurality of resource block sets, that a resource block set with a lowest index in the plurality of resource block sets includes the sidelink feedback channel resource corresponding to the first sub-channel; or determine, based on an index of a resource block set in a plurality of resource block sets, that a resource block set with a highest index in the plurality of resource block sets includes the sidelink feedback channel resource corresponding to the first sub-channel.

In a possible implementation, when the communication apparatus 1300 is configured to implement the function of the first terminal apparatus in the method embodiment shown in FIG. 12, the processing unit 1301 is specifically configured to: when a quantity of frequency domain resource units in the first sub-channel that belong to the first resource block set is greater than a quantity of frequency domain resource units in the first sub-channel that belong to a second resource block set, determine that the first resource block set includes the sidelink feedback channel resource corresponding to the first sub-channel; and/or when a quantity of frequency domain resource units included by the first sub-channel in the first resource block set is greater than a first value, determine that the first resource block set includes the sidelink feedback channel resource corresponding to the first sub-channel.

In a possible implementation, when the communication apparatus 1300 is configured to implement the function of the first terminal apparatus in the method embodiment shown in FIG. 12, the processing unit 1301 is specifically configured to determine that the first resource block set in the at least one resource block set includes the sidelink feedback channel resource corresponding to the first sub-channel; and determine that the second resource block set in the at least one resource block set includes the sidelink feedback channel resource corresponding to the first sub-channel.

In a possible implementation, when the communication apparatus 1300 is configured to implement the function of the first terminal apparatus in the method embodiment shown in FIG. 15, the processing unit 1301 is configured to: receive first sidelink information, where the first sidelink information corresponds to a plurality of resource sets, and two of the plurality of resource sets do not overlap in frequency domain and/or time domain; and send feedback information of the first sidelink information in a resource set in the plurality of resource sets via the transceiver unit 1320.

In a possible implementation, when the communication apparatus 1300 is configured to implement the function of the first terminal apparatus in the method embodiment shown in FIG. 15, the processing unit 1301 is specifically configured to send, the feedback information of the first sidelink information in a second resource set in the plurality of resource sets; and if sending fails, send, the feedback information of the first sidelink information in a third resource set in the plurality of resource sets.

For more detailed descriptions of the processing unit 1310 and the transceiver unit 1320, refer to the related descriptions in the method embodiment shown in FIG. 4, FIG. 7, FIG. 12, or FIG. 15.

As shown in **FIG. 18,** a communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions executed by the processor 1410, input data needed by the processor 1410 to run instructions, or data generated after the processor 1410 runs instructions.

When the communication apparatus 1400 is configured to implement the method shown in the terminal, the processor 1410 is configured to implement the function of the processing unit 1310, and the interface circuit 1420 is configured to implement the function of the transceiver unit 1320.

When the communication apparatus is a chip used in a terminal, the chip in the terminal implements the function of the terminal apparatus in the foregoing method embodiments. That the chip in the terminal receives information from another apparatus (for example, a terminal apparatus or a network apparatus) may be understood as that the information is first received by another module (for example, a radio frequency module or an antenna) in the terminal, and then sent by the module to the chip in the terminal. That the chip in the terminal sends information to another apparatus (for example, a terminal apparatus or a network apparatus) may be understood as that the information is first sent to another module (for example, a radio frequency module or an antenna) in the terminal, and then sent by the module to the another apparatus (for example, the terminal apparatus or the network apparatus).

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or any conventional processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a terminal. The processor and the storage medium may alternatively exist as discrete components in a terminal.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible to the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers (for example, digital numbers "first" and "second") in embodiments of this application are merely used for differentiation for ease of description, and are not used to limit the scope of embodiments of this application. Sequence numbers (for example, step numbers in the method embodiments) of the foregoing processes do not mean an execution sequence. The execution sequence of the steps may be different from that of the steps provided in embodiments of this application, and the execution sequence of the processes should be determined based on functions and internal logic of the processes. The steps in embodiments provided in this application may be used as optional steps. Embodiments of this application provide several possible implementations. In actual application, some steps in the foregoing embodiments may not be performed.

## Claims

1. A sidelink feedback information transmission method, wherein the method is applicable to a first terminal apparatus, and the method comprises:

   determining a first frequency domain resource set based on first configuration information, wherein frequency domain resource units in the first frequency domain resource set belong to a plurality of interlaces, the first frequency domain resource set comprises a plurality of resource subsets, the resource subset comprises at least one frequency domain resource unit, the plurality of resource subsets comprise a first resource subset, and frequency domain resource units in the first resource subset belong to a same interlace; and
   sending first sidelink feedback information in the first resource subset.

2. The method according to claim 1, wherein the frequency domain resource units in the first frequency domain resource set are arranged based on indexes of the plurality of interlaces; and/or
   the frequency domain resource units in the first frequency domain resource set are arranged based on an index of a frequency domain resource unit in an interlace.

3. The method according to claim 1 or 2, wherein one of the plurality of interlaces is the first resource subset.

4. The method according to any one of claims 1 to 3, wherein

the frequency domain resource units in the first frequency domain resource set comprise a frequency domain resource unit in a resource pool; or
the frequency domain resource units in the first frequency domain resource set comprise a frequency domain resource unit in a resource block set in a resource pool.

5. The method according to any one of claims 1 to 4, wherein the method further comprises:
determining, based on a quantity of resource subsets, a first quantity, and a quantity of PSSCH slots associated with one PSFCH slot, a quantity of resource subsets corresponding to a sub-channel in a slot in the PSSCH slots, wherein the first quantity is a quantity of sub-channels comprised in at least one resource block set in the resource pool.

6. The method according to claim 5, wherein

the first quantity comprises a quantity of sub-channels in the resource pool; or
the first quantity comprises a quantity of sub-channels in the resource block set.

7. The method according to claim 5 or 6, wherein the method further comprises:

receiving first sidelink information, wherein the first sidelink feedback information is feedback information corresponding to the first sidelink information; and
determining at least one resource subset based on indexes of a sub-channel and a slot that are occupied by the first sidelink information, the quantity of PSSCH slots associated with the PSFCH slot, and the quantity of resource subsets corresponding to the sub-channel in the slot in the PSSCH slots, wherein the at least one resource subset comprises the first resource subset.

8. The method according to claim 7, wherein the method further comprises:
determining a quantity of sidelink feedback channel resources in a first resource set based on second configuration information, a quantity of cyclic shift pairs, and the quantity of resource subsets corresponding to the sub-channel in the slot in the PSSCH slots, wherein the first resource set comprises a frequency domain resource unit in the at least one resource subset.

9. The method according to claim 8, wherein the method further comprises:

determining the quantity of sidelink feedback channel resources in the first resource set further based on a second quantity, wherein
the second quantity is determined based on the second configuration information and/or a total quantity of sub-channels occupied by the first sidelink information.

10. The method according to claim 7, wherein the method further comprises:

determining a quantity of sidelink feedback channel resources in a first resource set based on second configuration information, a second quantity, a quantity of cyclic shift pairs, and a quantity of first resource subsets, wherein the first resource set comprises a frequency domain resource unit in the at least one resource subset;
the second quantity comprises a total quantity of sub-channels occupied by the first sidelink information in a plurality of resource block sets; and
the quantity of first resource subsets comprises a total quantity of resource subsets corresponding to the sub-channels occupied by the first sidelink information in the plurality of resource block sets, and the quantity of first resource subsets is determined based on the quantity of resource subsets corresponding to the sub-channel in the slot in the PSSCH slots.

11. The method according to any one of claims 8 to 10, wherein the method further comprises:

determining, based on a first identifier, a second identifier, and the quantity of sidelink feedback channel resources in the first resource set, an index of a sidelink feedback channel resource corresponding to the first sidelink information, wherein

the first identifier comprises a physical layer source identifier of the first sidelink information, and the second identifier comprises an identifier of the first terminal apparatus or a predefined value.

**12.** The method according to any one of claims 1 to 11, wherein the plurality of interlaces comprise a common feedback resource; and
the method further comprises:
sending second sidelink feedback information on the common feedback resource.

**13.** A sidelink feedback information transmission method, wherein the method is applicable to a second terminal apparatus, and the method comprises:

determining a first frequency domain resource set based on first configuration information, wherein frequency domain resource units in the first frequency domain resource set belong to a plurality of interlaces, the first frequency domain resource set comprises a plurality of resource subsets, the resource subset comprises at least one frequency domain resource unit, the plurality of resource subsets comprise a first resource subset, and frequency domain resource units in the first resource subset belong to a same interlace; and
receiving first sidelink feedback information in the first resource subset.

**14.** The method according to claim 13, wherein the frequency domain resource units in the first frequency domain resource set are arranged based on indexes of the plurality of interlaces; and/or
the frequency domain resource units in the first frequency domain resource set are arranged based on an index of a frequency domain resource unit in an interlace.

**15.** The method according to claim 13 or 14, wherein one of the plurality of interlaces is the first resource subset.

**16.** The method according to any one of claims 13 to 15, wherein

the frequency domain resource units in the first frequency domain resource set comprise a frequency domain resource unit in a resource pool; or
the frequency domain resource units in the first frequency domain resource set comprise a frequency domain resource unit in a resource block set in a resource pool.

**17.** The method according to any one of claims 13 to 16, wherein the method further comprises:
determining, based on a quantity of resource subsets, a first quantity, and a quantity of PSSCH slots associated with one PSFCH slot, a quantity of resource subsets corresponding to a sub-channel in a slot in the PSSCH slots, wherein the first quantity is a quantity of sub-channels comprised in at least one resource block set in the resource pool.

**18.** The method according to claim 17, wherein

the first quantity comprises a quantity of sub-channels in the resource pool; or
the first quantity comprises a quantity of sub-channels in the resource block set.

**19.** The method according to claim 17 or 18, wherein the method further comprises:

sending first sidelink information, wherein the first sidelink feedback information is feedback information corresponding to the first sidelink information; and
determining at least one resource subset based on indexes of a sub-channel and a slot that are occupied by the first sidelink information, the quantity of PSSCH slots associated with the PSFCH slot, and the quantity of resource subsets corresponding to the sub-channel in the slot in the PSSCH slots, wherein the at least one resource subset comprises the first resource subset.

**20.** The method according to claim 19, wherein the method further comprises:
determining a quantity of sidelink feedback channel resources in a first resource set based on second configuration information, a quantity of cyclic shift pairs, and the quantity of resource subsets corresponding to the sub-channel in the slot in the PSSCH slots, wherein the first resource set comprises a frequency domain resource unit in the at least one resource subset.

**21.** The method according to claim 20, wherein the method further comprises:

determining the quantity of sidelink feedback channel resources in the first resource set further based on a second quantity, wherein
the second quantity is determined based on the second configuration information and/or a total quantity of sub-channels occupied by the first sidelink information.

**22.** The method according to claim 19, wherein the method further comprises:

determining a quantity of sidelink feedback channel resources in a first resource set based on second configuration information, a second quantity, a quantity of cyclic shift pairs, and a quantity of first resource subsets, wherein the first resource set comprises a frequency domain resource unit in the at least one resource subset;
the second quantity comprises a total quantity of sub-channels occupied by the first sidelink information in a plurality of resource block sets; and
the quantity of first resource subsets comprises a total quantity of resource subsets corresponding to the sub-channels occupied by the first sidelink information in the plurality of resource block sets, and the quantity of first resource subsets is determined based on the quantity of resource subsets corresponding to the sub-channel in the slot in the PSSCH slots.

**23.** The method according to any one of claims 20 to 22, wherein the method further comprises:

determining, based on a first identifier, a second identifier, and the quantity of sidelink feedback channel resources in the first resource set, an index of a sidelink feedback channel resource corresponding to the first sidelink information, wherein
the first identifier comprises a physical layer source identifier of the first sidelink information, and the second identifier comprises an identifier of the first terminal apparatus or a predefined value.

**24.** The method according to any one of claims 13 to 23, wherein the plurality of interlaces comprise a common feedback resource; and
the method further comprises:
receiving second sidelink feedback information on the common feedback resource.

**25.** A communication apparatus, comprising a processor, wherein the processor is configured to implement, by using a logic circuit or executing code instructions, the method according to any one of claims 1 to 12 or the method according to any one of claims 13 to 24.

**26.** A communication apparatus, comprising a module configured to perform the method according to any one of claims 1 to 12 and a module configured to perform the method according to any one of claims 13 to 24.

**27.** A chip system, comprising a processor, wherein the processor is configured to execute a computer-executable program, so that a device on which the chip system is installed performs the method according to any one of claims 1 to 12 or the method according to any one of claims 13 to 24.

**28.** A computer-readable storage medium, wherein the storage medium stores a computer program or instructions, and when the computer program or the instructions are executed by a communication apparatus, the method according to any one of claims 1 to 12 or the method according to any one of claims 13 to 24 is implemented.

**29.** A computer program product, wherein the computer program product stores a computer program, the computer program comprises program instructions, and when the program instructions are executed by a computer, the computer is enabled to perform the method according to any one of claims 1 to 12 or the method according to any one of claims 13 to 24.

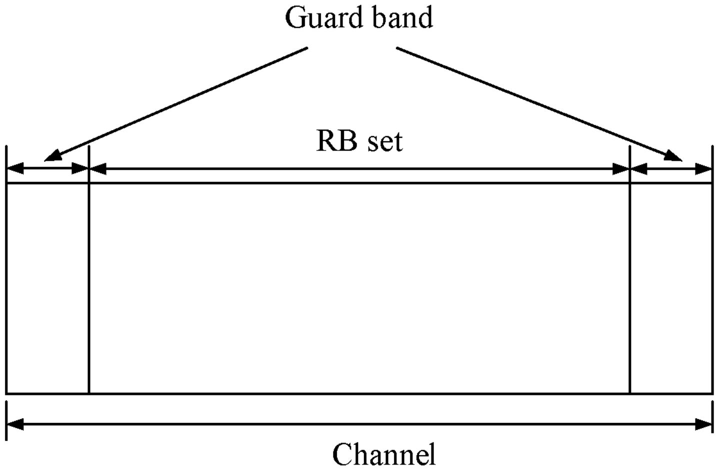


FIG. 1

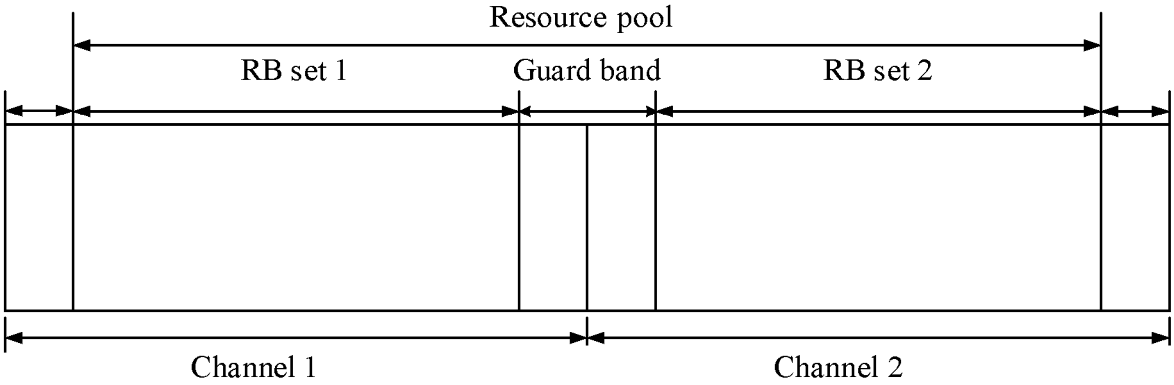


FIG. 2

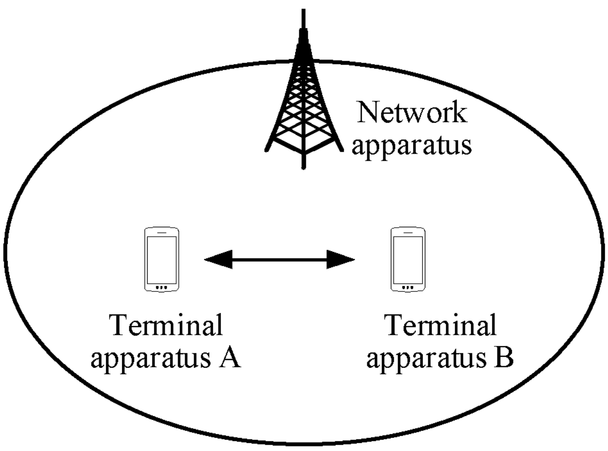


FIG. 3A

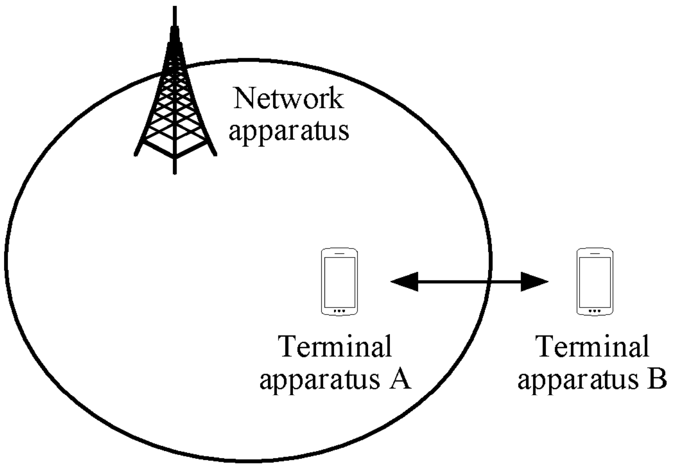


FIG. 3B

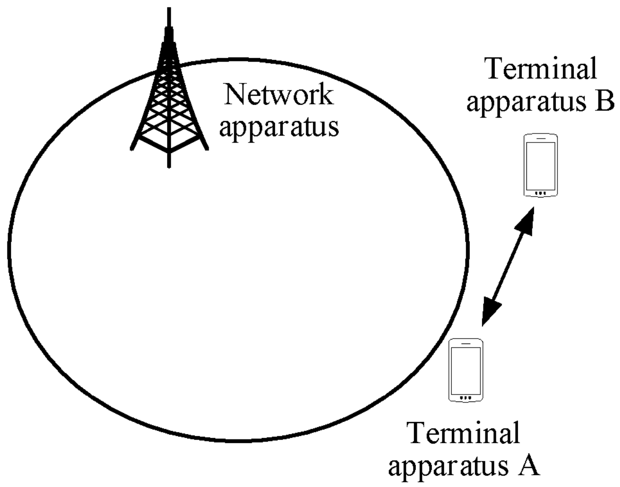


FIG. 3C

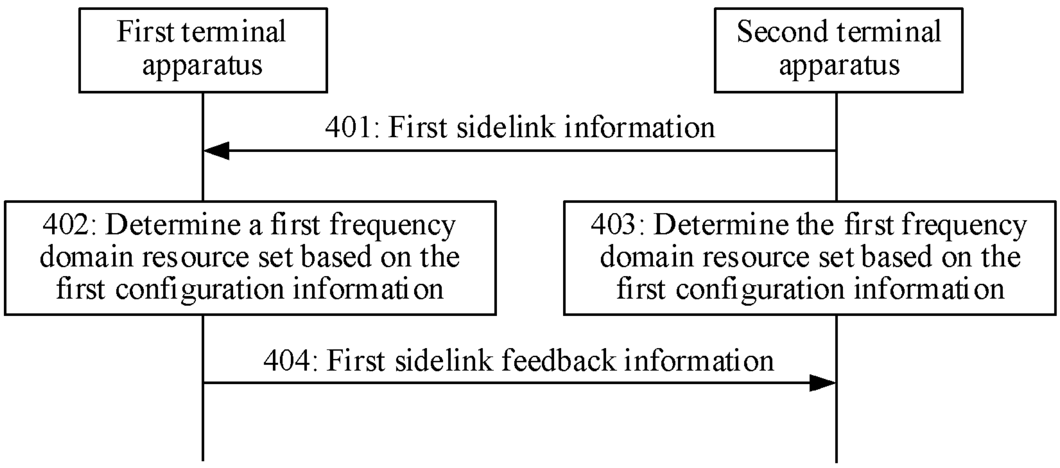


FIG. 4

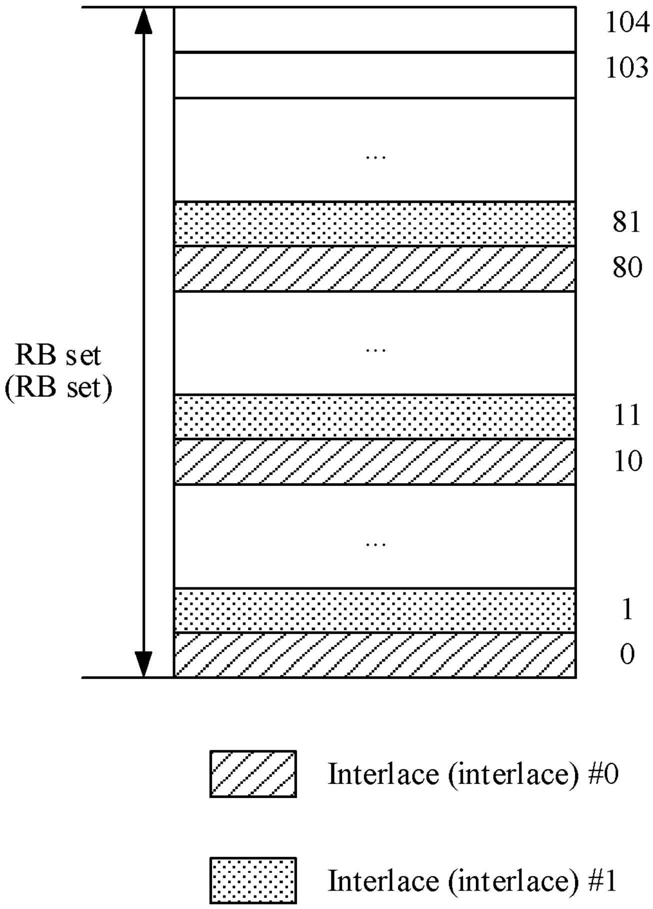
RB set
(RB set)
104
103
...
81
80
...
11
10
...
1
0
Interlace (interlace) #0
Interlace (interlace) #1

FIG. 5

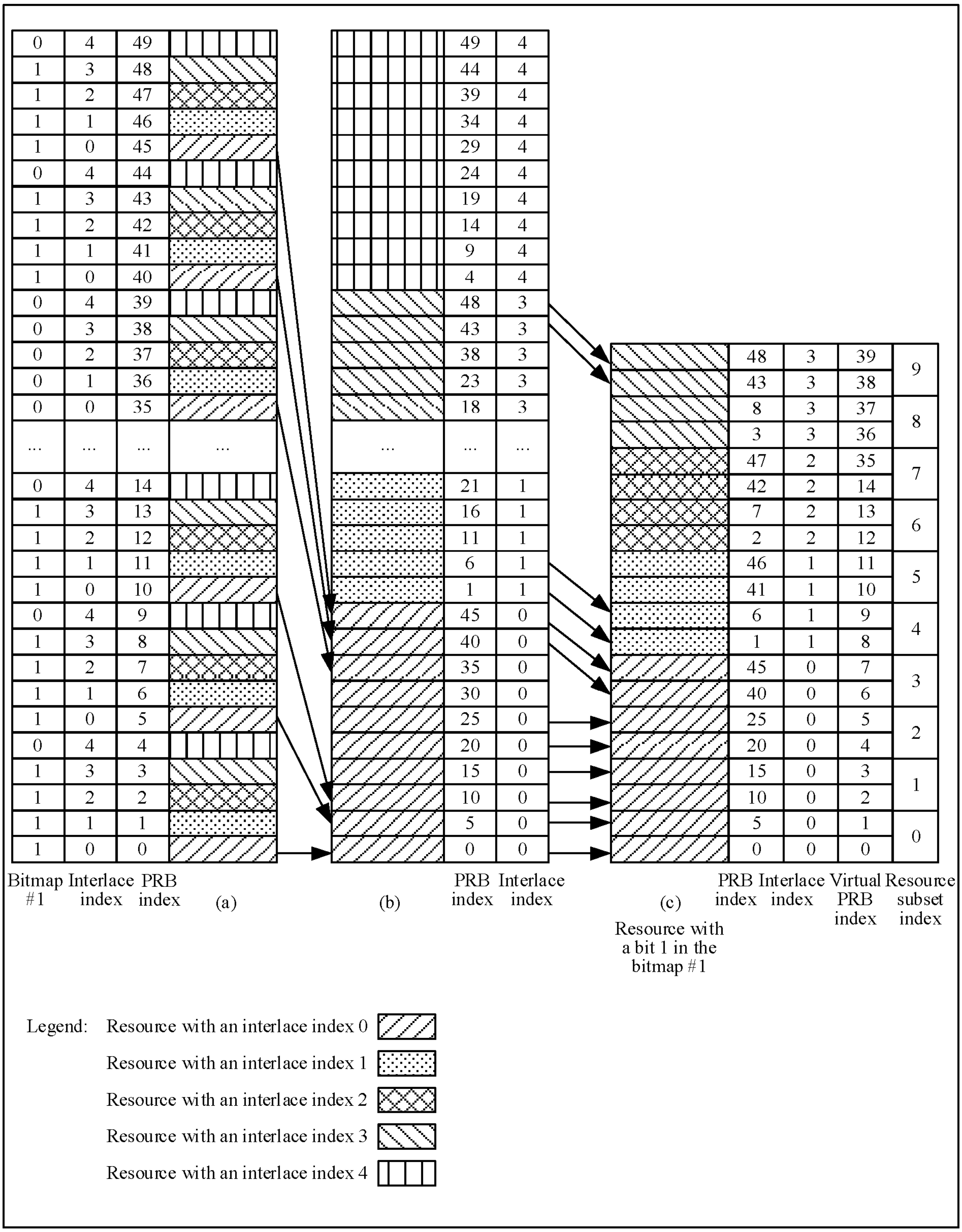

Bitmap #1
Interlace index
PRB index
(a)
(b)
PRB index
Interlace index
(c)
Resource with a bit 1 in the bitmap #1
PRB index
Interlace index
Virtual PRB index
Resource subset index
Legend:
Resource with an interlace index 0
Resource with an interlace index 1
Resource with an interlace index 2
Resource with an interlace index 3
Resource with an interlace index 4


FIG. 6

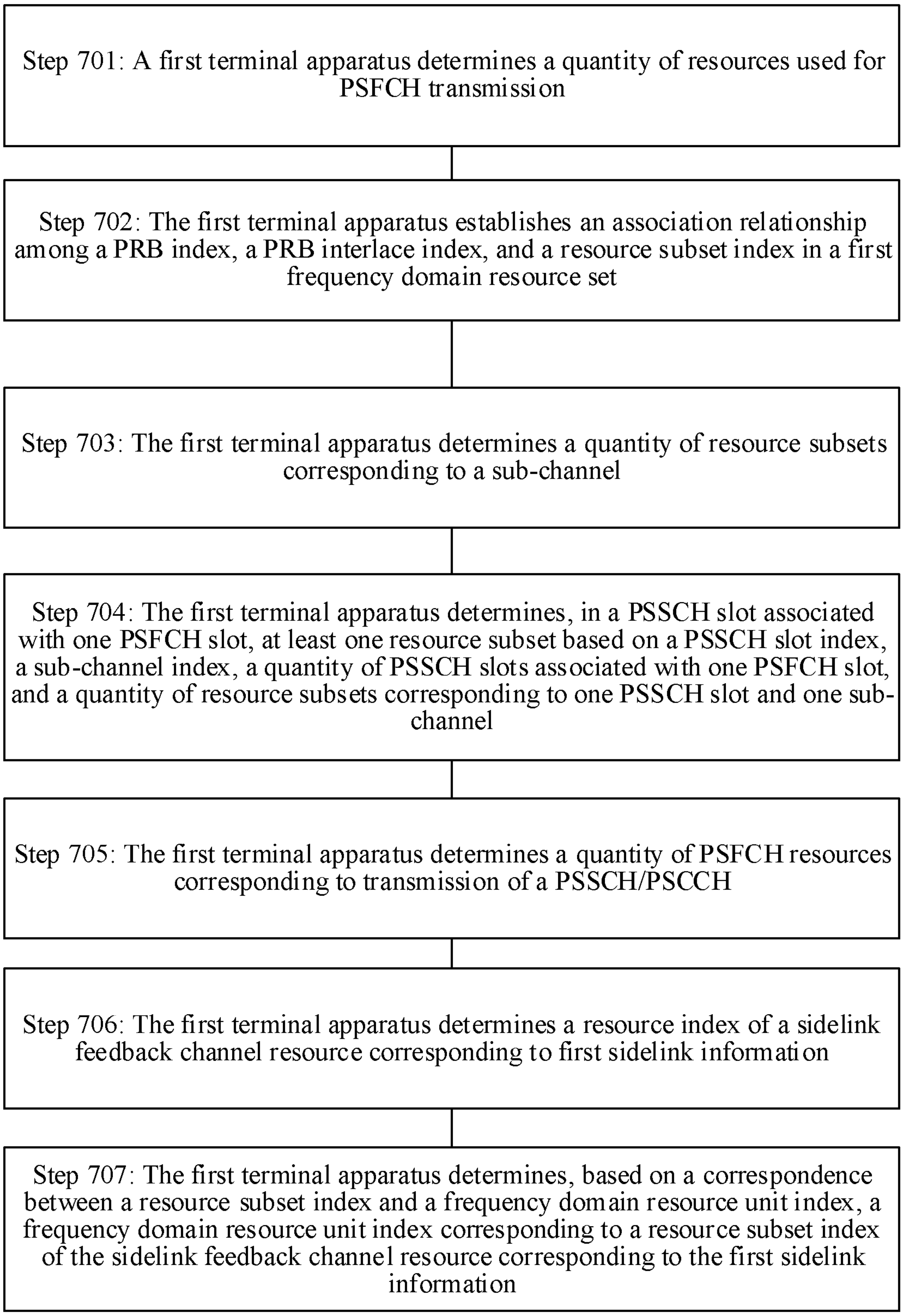
Step 701: A first terminal apparatus determines a quantity of resources used for PSFCH transmission
Step 702: The first terminal apparatus establishes an association relationship among a PRB index, a PRB interlace index, and a resource subset index in a first frequency domain resource set
Step 703: The first terminal apparatus determines a quantity of resource subsets corresponding to a sub-channel
Step 704: The first terminal apparatus determines, in a PSSCH slot associated with one PSFCH slot, at least one resource subset based on a PSSCH slot index, a sub-channel index, a quantity of PSSCH slots associated with one PSFCH slot, and a quantity of resource subsets corresponding to one PSSCH slot and one sub-channel
Step 705: The first terminal apparatus determines a quantity of PSFCH resources corresponding to transmission of a PSSCH/PSCCH
Step 706: The first terminal apparatus determines a resource index of a sidelink feedback channel resource corresponding to first sidelink information
Step 707: The first terminal apparatus determines, based on a correspondence between a resource subset index and a frequency domain resource unit index, a frequency domain resource unit index corresponding to a resource subset index of the sidelink feedback channel resource corresponding to the first sidelink information

FIG. 7

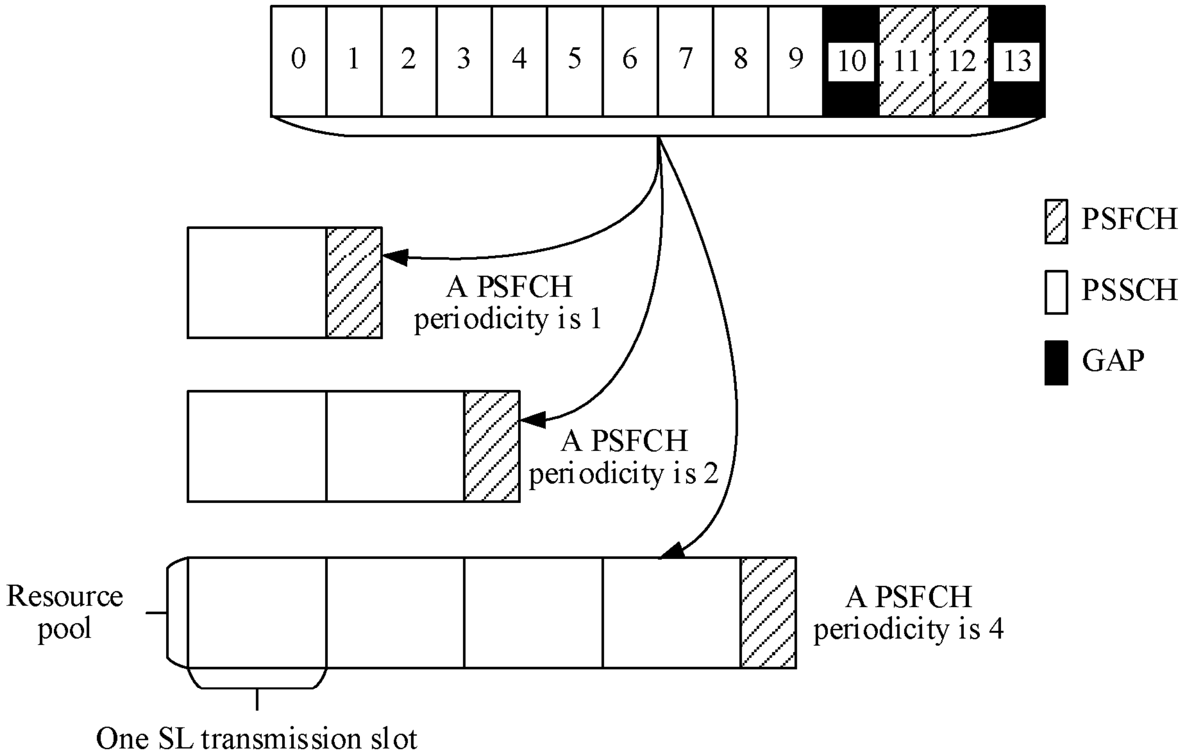
0
1
2
3
4
5
6
7
8
9
10
11
12
13
PSFCH
PSSCH
GAP
A PSFCH periodicity is 1
A PSFCH periodicity is 2
Resource pool
A PSFCH periodicity is 4
One SL transmission slot

FIG. 8

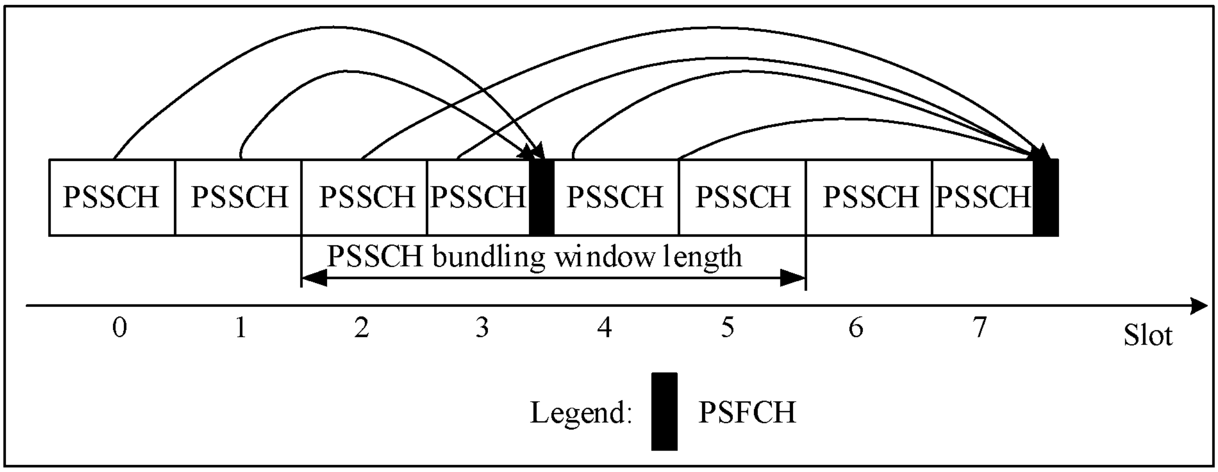
PSSCH
PSSCH
PSSCH
PSSCH
PSSCH
PSSCH
PSSCH
PSSCH
PSSCH bundling window length
0
1
2
3
4
5
6
7
Slot
Legend:
PSFCH

FIG. 9

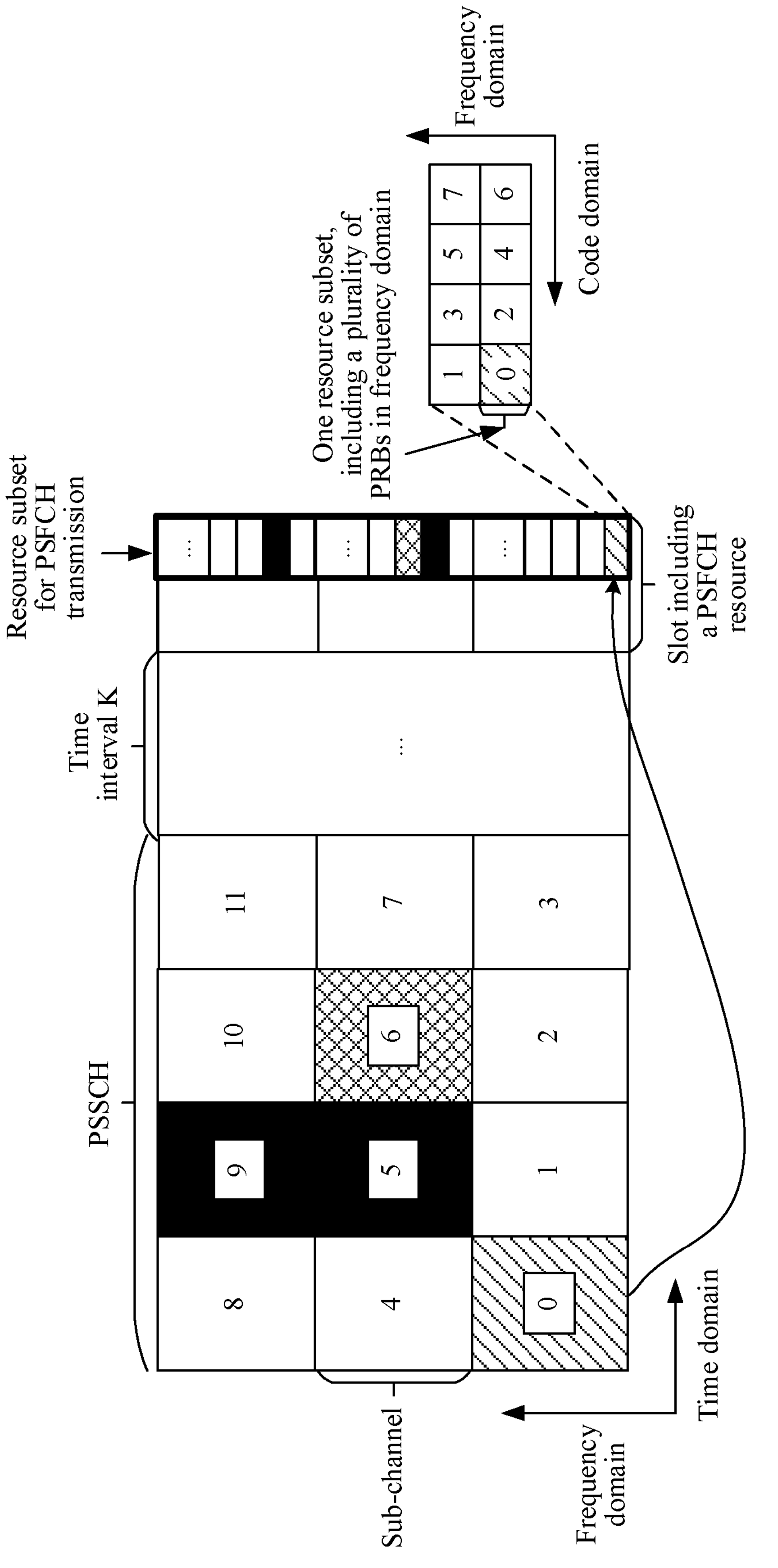
Frequency domain
Code domain
1
3
5
7
0
2
4
6
One resource subset, including a plurality of PRBs in frequency domain
Resource subset for PSFCH transmission
Slot including a PSFCH resource
Time interval K
PSSCH
8
9
10
11
4
5
6
7
0
1
2
3
...
Sub-channel
Frequency domain
Time domain

FIG. 10

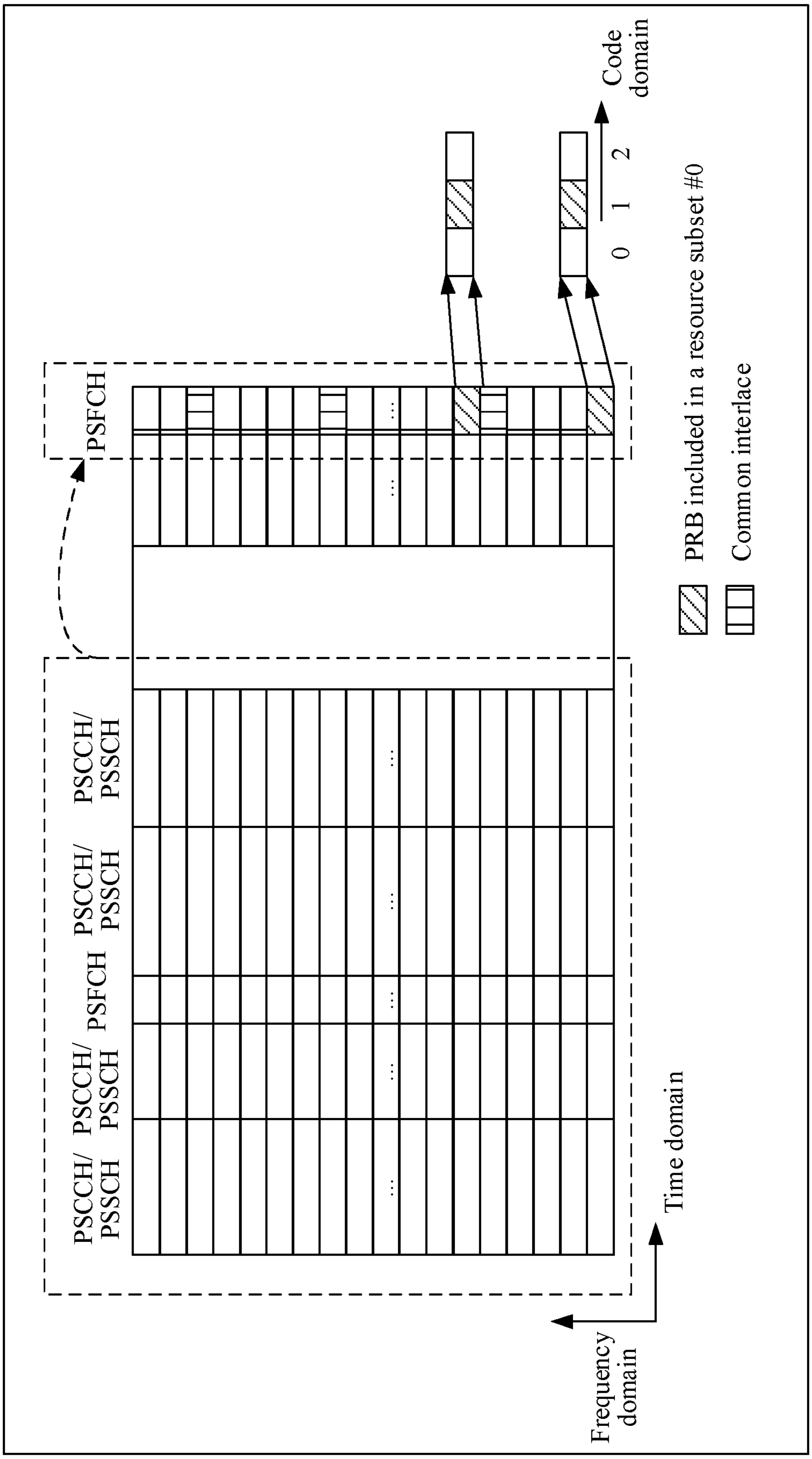
PSCCH/
PSSCH
PSCCH/
PSSCH
PSFCH
PSCCH/
PSSCH
PSCCH/
PSSCH
PSFCH
...
0
1
2
Code
domain
Time domain
Frequency
domain
PRB included in a resource subset #0
Common interlace

FIG. 11

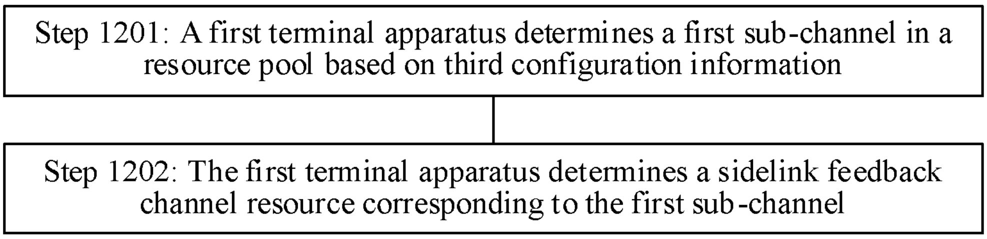


FIG. 12

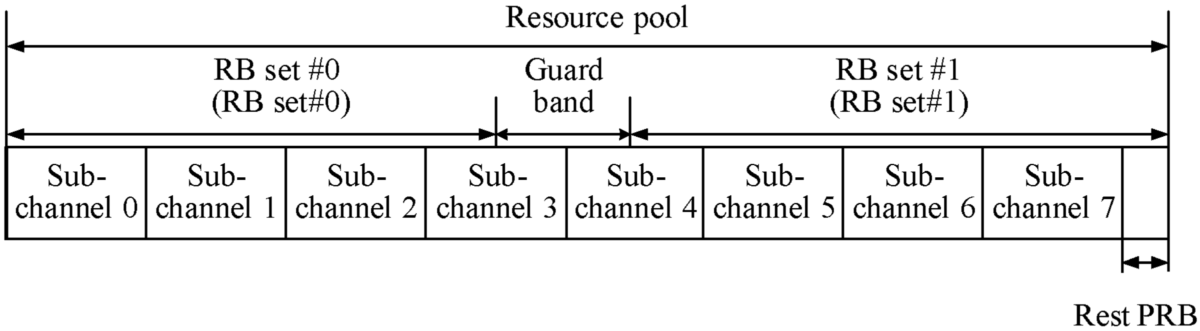


FIG. 13

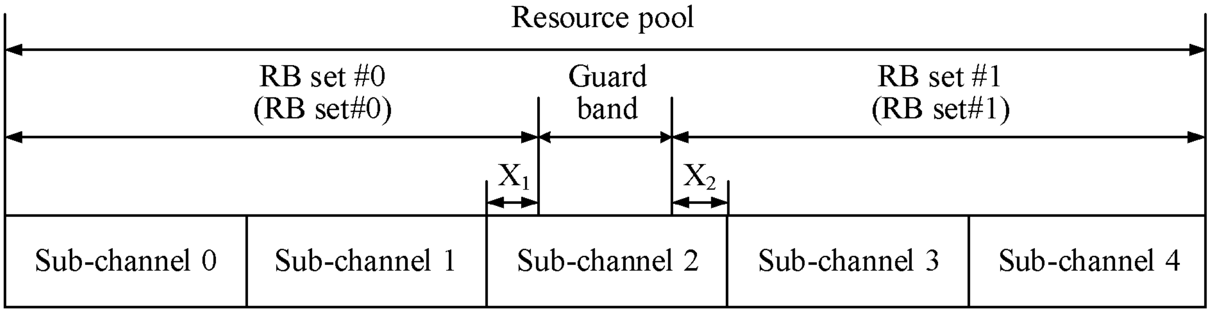


FIG. 14

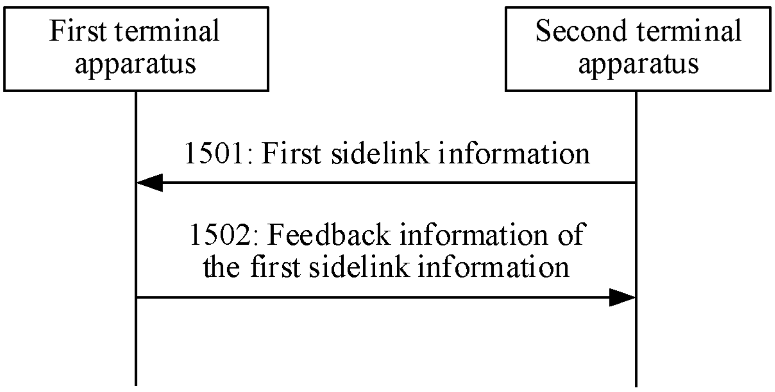


FIG. 15

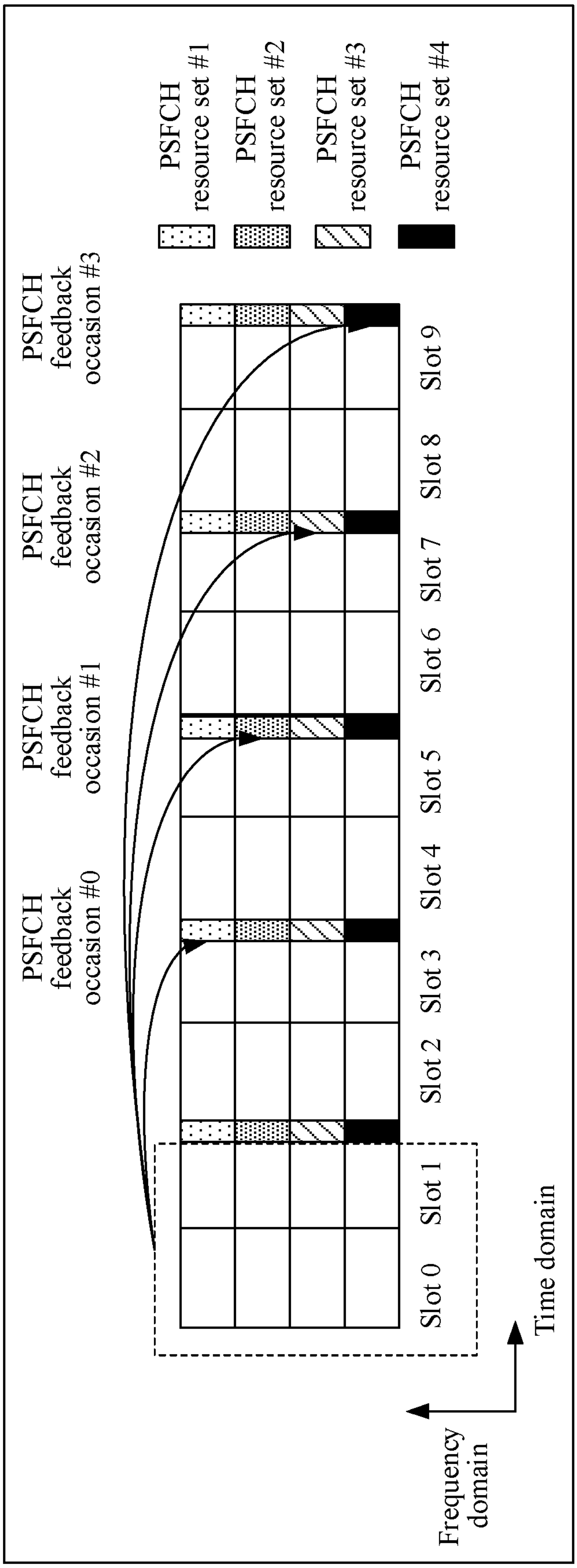
PSFCH feedback occasion #0
PSFCH feedback occasion #1
PSFCH feedback occasion #2
PSFCH feedback occasion #3
PSFCH resource set #1
PSFCH resource set #2
PSFCH resource set #3
PSFCH resource set #4
Slot 0
Slot 1
Slot 2
Slot 3
Slot 4
Slot 5
Slot 6
Slot 7
Slot 8
Slot 9
Frequency domain
Time domain

FIG. 16

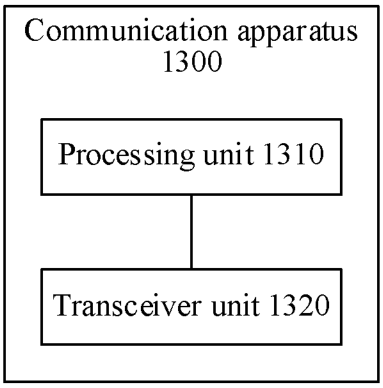
Communication apparatus 1300
Processing unit 1310
Transceiver unit 1320

FIG. 17

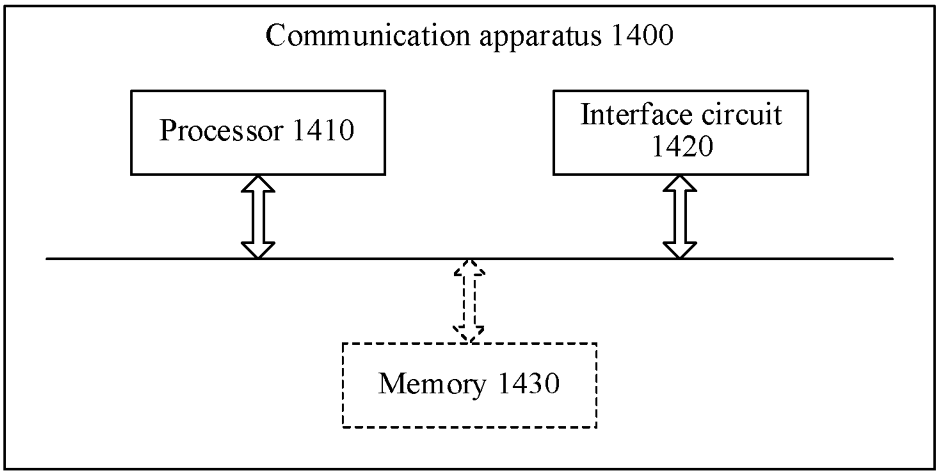
Communication apparatus 1400
Processor 1410
Interface circuit 1420
Memory 1430

FIG. 18

## INTERNATIONAL SEARCH REPORT

International application No.
**PCT/CN2024/092065**

**A. CLASSIFICATION OF SUBJECT MATTER**

H04W 72/25(2023.01)i; H04W 72/40(2023.01)i; H04W 72/0453(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧行链路, 侧链路, 副链路, 反馈, 资源集合, 资源池, 资源单元, 交错, 子集, sidelink, SL, feedback, PSFCH, RB, set, PRB, interlace, IRB, subset

**C. DOCUMENTS CONSIDERED TO BE RELEVANT**

| Category* | Citation of document, with indication, where appropriate, of the relevant passages | Relevant to claim No. |
|---|---|---|
| X | CN 115004821 A (BEIJING XIAOMI MOBILE SOFTWARE CO., LTD.) 02 September 2022 (2022-09-02)<br>description, paragraphs [0050]-[0248] | 1-29 |
| X | LG ELECTRONICS. "Discussion on Physical Channel Design Framework for Sidelink on Unlicensed Spectrum"<br>*3GPP TSG RAN WG1 #112bis-e R1-2302923,* 10 April 2023 (2023-04-10),<br>text, section 2.3 | 1-29 |
| A | CN 115225217 A (VIVO COMMUNICATION TECHNOLOGY CO., LTD.) 21 October 2022 (2022-10-21)<br>entire document | 1-29 |
| A | US 2023136864 A1 (LENOVO BEIJING LTD.) 04 May 2023 (2023-05-04)<br>entire document | 1-29 |
| A | WO 2023031332 A1 (FRAUNHOFER GES FORSCHUNG) 09 March 2023 (2023-03-09)<br>entire document | 1-29 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 June 2024** | **20 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2024/092065**

| Patent document cited in search report | | | Publication date (day/month/year) | Patent family member(s) | | | Publication date (day/month/year) |
|---|---|---|---|---|---|---|---|
| CN | 115004821 | A | 02 September 2022 | None | | | |
| CN | 115225217 | A | 21 October 2022 | None | | | |
| US | 2023136864 | A1 | 04 May 2023 | EP | 4128958 | A1 | 08 February 2023 |
| | | | | EP | 4128958 | A4 | 20 December 2023 |
| | | | | WO | 2021189428 | A1 | 30 September 2021 |
| | | | | KR | 20220159995 | A | 05 December 2022 |
| WO | 2023031332 | A1 | 09 March 2023 | KR | 20240055024 | A | 26 April 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311007742